# EUROPEAN PATENT APPLICATION

(11) **EP 4 814 548 A1**
(43) Date of publication of application: **30.09.2026**
(21) Application number: 24894011.6
(22) Date of filing: 07.11.2024
(51) Int. Cl.: G02B 5/22, C08F 8/16

(54) **MATERIAL FOR LASER WELDING**

(30) Priority: 21.11.2023 JP 2023197624
(71) Applicant: Nippon Shokubai Co., Ltd., Osaka-shi, Osaka 541-0043 (JP)
(72) Inventor: HISANO, Miki, Suita-shi, Osaka 564-0034 (JP); AOKI, Masanori, Suita-shi, Osaka 564-0034 (JP); ONISHI, Ryuji, Suita-shi, Osaka 564-0034 (JP)
(74) Representative: Müller-Boré & Partner Patentanwälte PartG mbB
(86) International application number: PCT/JP2024/039672
(87) International publication number: WO 2025/110019

(57) **Abstract**

A material for laser welding includes a resin and a cyanine compound represented by the following Formula (1). The cyanine compound has, in a range of wavelengths from 380 nm to 780 nm, an average transmittance of 81% or more when a transmittance at an absorption maximum wavelength is 10% in a range of wavelengths from 300 nm to 1300 nm. In Formula (1), L represents a methine chain having 3 or more and 9 or less carbon atoms, the methine groups contained in the methine chain each independently optionally have a substituent, the substituents being optionally linked to each other; A⁺ and A represent a group bonded to the methine chain L; and X⁻ represents a monovalent anion whose conjugate acid has a pKa of -8.0 or less.

A^{⊕}-L=A X^{⊖} (1)

## Description

### Technical Field

The present invention relates to a material for laser welding, and more specifically relates to a material for laser welding containing a resin and a cyanine compound. Also, the present invention provides a laminate having a light absorbing layer formed of the material for laser welding of the present invention, and an absorbing material formed of the material for laser welding of the present invention.

### Background Art

Laser welding is a joining method for welding members to each other through irradiation with laser light. In laser welding, usually, a transmissive material that transmits laser light and an absorbing material that absorbs laser light are brought into contact with each other, and the transmissive material and the absorbing material are joined by irradiating the transmissive material side with laser light. An example of the absorbing material includes a resin containing a coloring pigment such as carbon black or a black dye, and by using such an absorbing material, the energy of laser light is efficiently absorbed by the absorbing material, allowing laser welding to be suitably performed. However, in this case, the difference in color between the transmissive material and the absorbing material makes a joined portion between the transmissive material and the absorbing material conspicuous, resulting in a concern that applications of the welded body in which the transmissive material and the absorbing material have been welded are limited. In contrast, Patent Document 1 discloses a material for laser welding containing a specific squarylium compound as a pigment that absorbs laser light. According to the material for laser welding of Patent Document 1, the transparent resins can be laser-welded to each other, as a result of which the resultant has high invisibility, enabling a joined portion by laser welding to be inconspicuous.

### Citation List

### Patent Document

Patent Document 1: JP 2019-011455 A

### Summary of Invention

### Technical Problem

In a material for laser welding, a pigment that absorbs laser light desirably has high visible light transparency, thereby facilitating the color of the material for laser welding to be matched with the color of the member to be joined or to be formed in any color, thereby enabling the application range to be widened. The present invention has been made in view of the above-described circumstances, and an object of the present invention is to provide a material for laser welding which can be suitably used for laser welding and has a laser light-absorbing pigment having high visible light transmissivity. The present invention also provides a laminate having a light absorbing layer formed of the material for laser welding of the present invention and an absorbing material formed of the material for laser welding of the present invention.

### Solution to Problem

The material for laser welding, the laminate, and the absorbing material of the present invention, which have been able to solve the above-described problems are as follows.
[1] A material for laser welding, including a resin and a cyanine compound represented by Formula (1) set forth below: [Chem. 1]

   A^{⊕}-L=A X^{⊖} (1)

   where in Formula (1),
   L represents a methine chain having 3 or more and 9 or less carbon atoms, and the methine groups contained in the methine chain each independently optionally have a substituent, and the substituents are optionally linked to each other;
   A⁺ and A represent a group bonded to the methine chain L; and
   X⁻ represents a monovalent anion whose conjugate acid has a pKa of -8.0 or less,
   wherein the cyanine compound has, in a range of wavelengths from 380 nm to 780 nm, an average transmittance of 81% or more when a transmittance at an absorption maximum wavelength is 10% in a range of wavelengths from 300 nm to 1300 nm.
[2] The material for laser welding according to [1], wherein the cyanine compound has the absorption maximum wavelength in a range of wavelengths from 750 nm to 1300 nm.
[3] The material for laser welding according to [1] or [2], further including a solvent.
[4] The material for laser welding according to any of [1] to [3], wherein the resin includes a thermoplastic resin.
[5] The material for laser welding according to any of [1] to [4], wherein the resin includes a (meth)acrylic resin including a structural unit having a ring structure in a main chain, and the ring structure includes at least one selected from the group consisting of a lactone ring structure, a glutarimide structure and a maleimide structure.
[6] The material for laser welding according to any of [1] to [5], wherein in Formula (1), A⁺ and A represent any group represented by the following Formula (2) to Formula (7) set forth below: 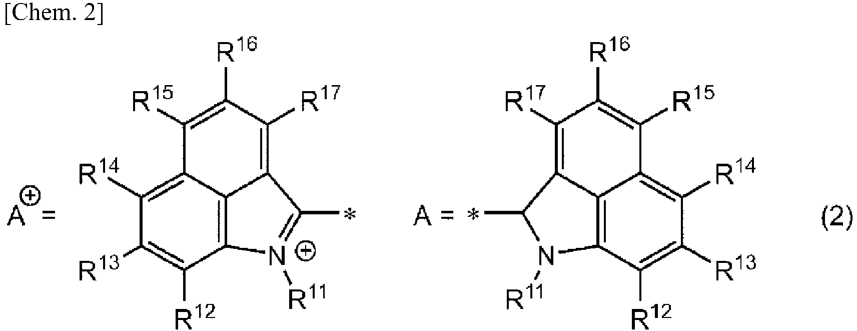 where in Formula (2), R¹¹ represents an organic group, R¹² to R¹⁷ each independently represent a hydrogen atom, a halogen atom, or an organic group, and * represents a site of bonding to the methine chain L in Formula (1); 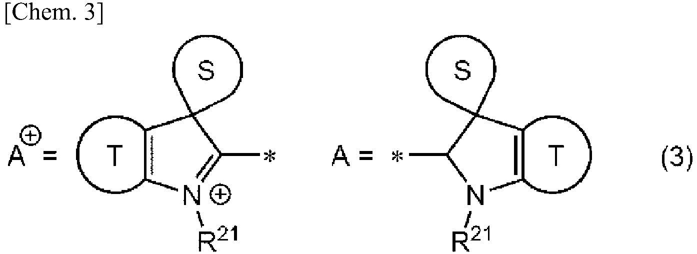
   where in Formula (3), R²¹ represents an organic group,
   a ring S represents: a hydrocarbon ring having a condensed ring structure optionally having a substituent; or a heterocyclic ring having a condensed ring structure optionally having a substituent; and the ring S is spiro-bonded to an adjacent pyrrole ring, a ring T represents: an aromatic hydrocarbon ring optionally having a substituent; an aromatic heterocyclic ring optionally having a substituent; or a condensed ring including these ring structures optionally having a substituent, and * represents a site of bonding to the methine chain L of Formula (1); 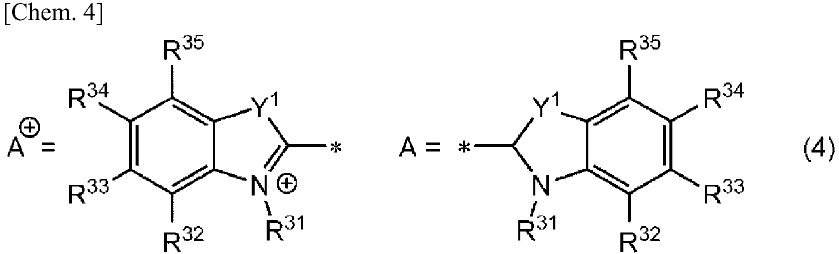
   where in Formula (4), R³¹ represents an organic group, R³² to R³⁵ each independently represent a hydrogen atom, a halogen atom, or an organic group, or R³² and R³³, R³³ and R³⁴, and R³⁴ and R³⁵ are optionally linked to each other to form a ring, Y¹ represents an oxygen atom, a sulfur atom, CH=CH, or CR³⁶R³⁷, in which R³⁶ and R³⁷ each represent an organic group, and * represents a site of bonding to the methine chain L of Formula (1); 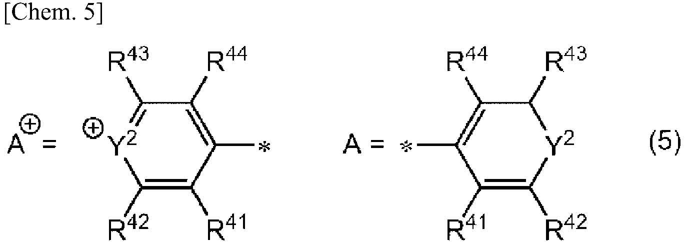
   where in Formula (5), R⁴¹ to R⁴⁴ each independently represent a hydrogen atom, a halogen atom, or an organic group, or R⁴¹ and R⁴², and R⁴³ and R⁴⁴ are optionally linked to each other to form a ring, Y² represents an oxygen atom, a sulfur atom, or NR⁴⁵, in which R⁴⁵ represents an organic group, and * represents a site of bonding to the methine chain L of Formula (1); 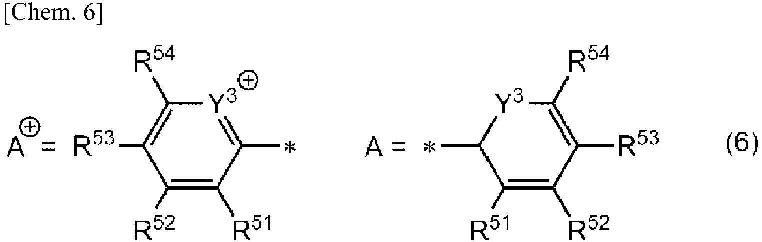
   where in Formula (6), R⁵¹ to R⁵⁴ each independently represent a hydrogen atom, a halogen atom, or an organic group, Y³ represents an oxygen atom, a sulfur atom, or NR⁵⁵, in which R⁵⁵ represents an organic group, and * represents a site of bonding to the methine chain L of Formula (1); and 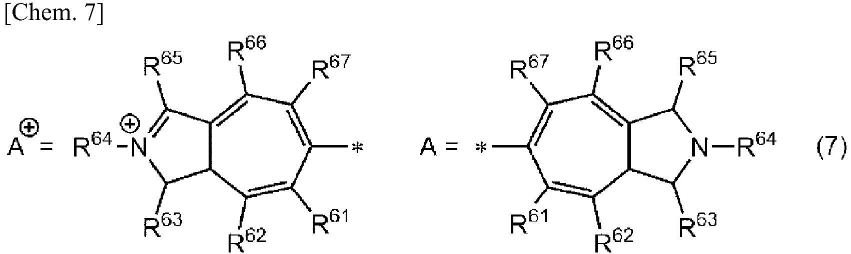
   where in Formula (7), R⁶¹ to R⁶³ and R⁶⁵ to R⁶⁷ each independently represent a hydrogen atom, a halogen atom, or an organic group, R⁶⁴ represents an organic group, and * represents a site of bonding to the methine chain L of Formula (1).
[7] A laminate, including: a base material; and a light absorbing layer provided on the base material, the light absorbing layer including the material for laser welding described in any of [1] to [6].
[8] The laminate according to [7], wherein an average transmittance of the light absorbing layer in a range of wavelengths from 380 nm to 780 nm is 80% or more.
[9] An absorbing material, including the material for laser welding described in any of [1] to [6].

### Advantageous Effects of Invention

The material for laser welding of the present invention can suitably weld members to each other by irradiation with laser light, and the cyanine compound contained therein having high visible light transmissivity facilitates the material to be formed in any color, leading to a wide application range of the material.

### Brief Description of Drawings

FIG. 1 indicates transmission spectra of light absorbing layers of resin base materials B1 to B4 fabricated in Examples.
FIG. 2 indicates transmission spectra of light absorbing layers of resin base materials B5 and B6 fabricated in Examples.
FIG. 3 indicates transmission spectra of light absorbing layers of resin base materials B7 to B9 fabricated in Examples.
FIG. 4 indicates a transmission spectrum of a light absorbing layer of a resin base material B10 fabricated in Example.
FIG. 5 indicates a transmission spectrum of a light absorbing layer of a resin base material B11 fabricated in Example.
FIG. 6 indicates a transmission spectrum of a resin base material D1 fabricated in Example.
FIG. 7 indicates transmission spectra of resin base materials D2 and D3 fabricated in Examples.
FIG. 8 indicates a transmission spectrum of resin base material D4 fabricated in Example.
FIG. 9 indicates a transmission spectrum of a resin base material D5 fabricated in Example.
FIG. 10 indicates a transmission spectrum of a resin base material D6 fabricated in Example.
FIG. 11 indicates a transmission spectrum of pigment components of a resin base material D1 fabricated in Example.
FIG. 12 indicates transmission spectra of the pigment components of resin base materials D2 and D3 fabricated in Examples.
FIG. 13 indicates a transmission spectrum of pigment components of a resin base material D4 fabricated in Example.
FIG. 14 indicates a transmission spectrum of pigment components of a resin base material D5 fabricated in Example.
FIG. 15 indicates a transmission spectrum of pigment components of a resin base material D6 fabricated in Example.

### Description of Embodiments

The present invention relates to a material for laser welding containing a resin and a cyanine compound. The material for laser welding is used for welding members to each other by irradiation with laser light, and the material for laser welding absorbs the laser light by irradiation with the laser light to generate heat, whereby the members can be welded to each other.

The material for laser welding of the present invention uses a cyanine compound as a pigment that absorbs laser light. In laser welding, for example, laser light having a wavelength from 800 nm to 1300 nm is used, and the cyanine compound can suitably absorb light in this wavelength range and function as a heat source. On the other hand, the cyanine compound has high light transmissivity in the visible light region and is excellent in invisibility. Therefore, the material for laser welding of the present invention can be made substantially free from coloration due to the cyanine compound, facilitating the color of the material for laser welding to be matched with that of a transmissive material or to be formed into any color, leading to a wide application range of the material. The material for laser welding of the present invention can be used for forming an absorbing material that absorbs laser light, or for forming a light absorbing layer that is provided between members to be laser-welded and joins these members to each other. In the latter case, at least one of the members to be laser-welded is a transmissive material that transmits laser light. The material for laser welding of the present invention will be described in detail below.

The material for laser welding of the present invention contains a resin and a cyanine compound represented by Formula (1) set forth below. In Formula (1), L represents a methine chain having 3 or more and 9 or less carbon atoms, and the methine groups contained in the methine chain may each independently have a substituent, and the substituents may be linked to each other; A⁺ and A represent a group bonded to a methine chain L; and X⁻ represents a monovalent anion whose conjugate acid has a pKa of -8.0 or less. The cyanine compound of Formula (1) includes a compound having a resonance relationship.

[Chem. 8] A^{⊕}-L=A X^{⊖} (1)

In Formula (1), L represents a methine chain having 3 or more and 9 or less carbon atoms, that is, it is a methine chain in which 3 or more and 9 or less methine groups (-CH=) are connected and forming a conjugated double bond. The methine groups (that is, hydrogen atoms on the methine group) contained in the methine chain may each independently have a substituent, and the substituents may be linked to each other. Examples of the substituent that the methine group may have (hereinafter may be referred to as "substituent P") include a halogeno group (halogen atom) and an organic group. When the methine groups contained in the methine chain have a substituent, the number of carbon atoms that the methine chain contains means the number of carbon atoms in the methine chain excluding the substituent(s).

The methine chain L is preferably a chain in which an odd number of methine groups are linked, and therefore, the methine chain preferably has 3, 5, 7, or 9 carbon atoms, that is, a methine chain in which 3, 5, 7, or 9 methine groups are linked is preferred. In this case, the methine compound represented by Formula (1) is represented by the following Formula (1A) to Formula (1D). In Formula (1A) to Formula (1D), R⁷¹ to R⁷⁹ each independently represent a hydrogen atom, a halogen atom, or an organic group.

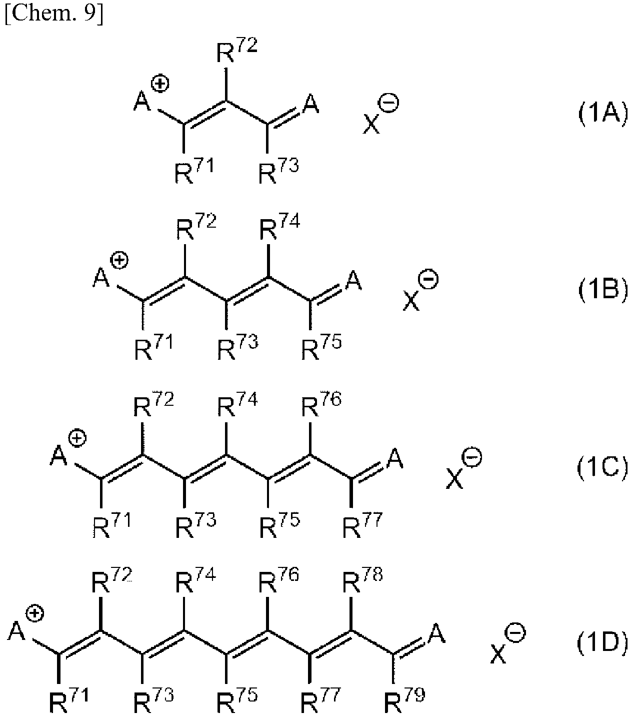

Examples of the organic group of substituent P that the methine group may have include an alkyl group, an alkoxy group, an alkylthio group, an alkoxycarbonyl group, an alkylsulfonyl group, an alkylsulfinyl group, an aryl group, an aralkyl group, an aryloxy group, an arylthio group, an aryloxycarbonyl group, an arylsulfonyl group, an arylsulfinyl group, a heteroaryl group, an amino group, an amide group, a sulfonamide group, a carboxyl group (carboxylic acid group), and a cyano group.

Examples of an alkyl group of the substituent P include linear or branched alkyl groups such as a methyl group, an ethyl group, a propyl group, an isopropyl group, an n-butyl group, an isobutyl group, a t-butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, and an icosyl group; and cycloalkyl groups such as a cyclopropyl group, a cyclobutyl group, a cyclopentyl group, a cyclohexyl group, a cycloheptyl group, a cyclooctyl group, a cyclononyl group, and a cyclodecyl group. The alkyl group may have a substituent, and examples of the substituent of the alkyl group include an aryl group, a heteroaryl group, a halogeno group, a hydroxyl group, a carboxyl group, an alkoxy group, a cyano group, a nitro group, an amino group, and a sulfo group. Examples of the alkyl group having a halogeno group include a monohalogenoalkyl group, a dihalogenoalkyl group, an alkyl group having a trihalomethyl unit, and a perhalogenoalkyl group. Among the halogeno groups, a fluorine atom, a chlorine atom, and a bromine atom are preferred, and the fluorine atom is particularly preferred. The alkyl group contains (the number of carbon atoms in the alkyl group excluding the substituent) preferably from 1 to 20 carbon atoms, and specifically, in the case of a linear or branched alkyl group, the number of carbon atoms is preferably from 1 to 20, more preferably from 1 to 10, and still more preferably from 1 to 5, and in the case of a cyclic alkyl group, the number of carbon atoms is preferably from 4 to 10 and more preferably from 5 to 8.

For the specific examples of the alkyl groups included in the alkoxy group, the alkylthio group, the alkoxycarbonyl group, the alkylsulfonyl group, and the alkylsulfinyl group of the substituent P, a reference is made to the above-described description regarding the alkyl groups.

Examples of the aryl group of the substituent P include a phenyl group, a biphenyl group, a naphthyl group, an anthryl group, a phenanthryl group, a pyrenyl group, and an indenyl group. The aryl group may have a substituent, and examples of the substituent of the aryl group include an alkyl group, an alkoxy group, a heteroaryl group, a halogeno group, a halogenoalkyl group, a hydroxyl group, a cyano group, a nitro group, an amino group, a thiocyanate group, an acyl group, an alkoxycarbonyl group, an aryloxycarbonyl group, a carbamoyl group, a sulfo group, an alkylsulfinyl group, an arylsulfinyl group, an alkylsulfonyl group, an arylsulfonyl group, and a sulfamoyl group. The aryl group contains (the number of carbon atoms in the aryl group excluding the substituent) preferably from 6 to 20 carbon atoms, and more preferably from 6 to 12 carbon atoms.

Examples of the aralkyl group of the substituent P include a benzyl group, a phenethyl group, a phenylpropyl group, a phenylbutyl group, a phenylpentyl group, and a naphthylmethyl group. The aralkyl group may have a substituent, and examples of the substituent of the aralkyl group include an alkyl group, an alkoxy group, a halogeno group, a halogenoalkyl group, a cyano group, a nitro group, a thiocyanate group, an acyl group, an alkoxycarbonyl group, an aryloxycarbonyl group, a carbamoyl group, a sulfo group, an alkylsulfinyl group, an arylsulfinyl group, an alkylsulfonyl group, an arylsulfonyl group, and a sulfamoyl group. The aralkyl group contains (the number of carbon atoms in the aralkyl group excluding the substituent) preferably from 7 to 25 carbon atoms, and more preferably from 7 to 15 carbon atoms.

For specific examples of the aryl groups included in the aryloxy group, the arylthio group, the aryloxycarbonyl group, the arylsulfonyl group, and the arylsulfinyl group of the substituent P, reference is made to the description regarding the aryl groups described above.

Examples of the heteroaryl group of the substituent P include a thienyl group, a thiopyranyl group, an isothiochromenyl group, a pyrrolyl group, an imidazolyl group, a pyrazolyl group, a pyridyl group, a pyrrolidinyl group, a pyrimidinyl group, a pyridazinyl group, a thiazolyl group, an isothiazolyl group, a furanyl group, and a pyranyl group. The heteroaryl group may have a substituent, and examples of the substituent of the heteroaryl group include an alkyl group, an alkoxy group, an aryl group, a halogeno group, a halogenoalkyl group, a hydroxyl group, a cyano group, an amino group, a nitro group, a thiocyanate group, an acyl group, an alkoxycarbonyl group, an aryloxycarbonyl group, a carbamoyl group, a sulfo group, an alkylsulfinyl group, an arylsulfinyl group, an alkylsulfonyl group, an arylsulfonyl group, and a sulfamoyl group. The heteroaryl group contains (the number of carbon atoms in the heteroaryl group excluding the substituent) preferably from 2 to 20 carbon atoms, and more preferably from 3 to 15 carbon atoms.

An example of the amino group of the substituent P includes a group represented by the formula: -NR^{a1}R^{a2}, where R^{a1} and R^{a2} are each independently a hydrogen atom, an alkyl group, an alkenyl group, an alkynyl group, an aryl group, an aralkyl group, and a heteroaryl group. For specific examples of the alkyl group, the aryl group, the aralkyl group, and the heteroaryl group, reference can be made to the above-described description of these groups, and examples of the alkenyl group and the alkynyl group include a group in which the carbon-carbon single bond of the alkyl group exemplified above is partially replaced by a double bond or a triple bond. R^{a1} and R^{a2} may be linked to each other to form a ring. The number of membered rings of a ring formed by linking R^{a1} and R^{a2} is preferably 5 or 6, and a constituent atom of the ring, other than a nitrogen atom, is preferably a carbon atom, an oxygen atom, and a sulfur atom.

The amide group of the substituent P is preferably a group represented by the formula: -NH-C(=O)-R^{a3}, and examples of R^{a3} include an alkyl group, an aryl group, an aralkyl group, and a heteroaryl group. For specific examples of the alkyl group, the aryl group, the aralkyl group, and the heteroaryl group, reference is made to the descriptions of these groups described above.

An example of the sulfonamide group of the substituent P includes a group represented by the formula: -NH-SO₂-R^{a4}, and examples of R^{a4} include an alkyl group, an aryl group, an aralkyl group, and a heteroaryl group. For specific examples of the alkyl group, the aryl group, the aralkyl group, and the heteroaryl group, reference is made to the descriptions of these groups described above.

The substituent P is preferably a halogeno group, an alkyl group, an alkoxy group, an aryl group, an aralkyl group, and an amino group, and more preferably a halogeno group, an alkyl group, an aryl group, and an amino group. In this case, the alkyl group and the alkoxy group each contain preferably from 1 to 8 carbon atoms, more preferably from 1 to 5 carbon atoms, and still more preferably from 1 to 3 carbon atoms, the aryl group contains preferably from 6 to 12 carbon atoms, and more preferably from 6 to 10 carbon atoms, and the aralkyl group contains preferably from 7 to 13 carbon atoms, and more preferably from 7 to 11 carbon atoms. The amino group is represented by the formula: -NR^{a1}R^{a2}, and R^{a1} and R^{a2} are each independently preferably a hydrogen atom, an alkyl group, or an aryl group, the alkyl group contains preferably from 1 to 5 carbon atoms, and more preferably from 1 to 3 carbon atoms, and the aryl group contains preferably from 6 to 12 carbon atoms, and more preferably from 6 to 10 carbon atoms.

When the substituents P of the methine group are linked to each other, it is preferable that substituents bonded to the methine group, two atoms away from the substituent P are linked to each other to form a ring. In Formula (1A) to Formula (1D), R⁷¹ and R⁷³, R⁷² and R⁷⁴, R⁷³ and R⁷⁵, R⁷⁴ and R⁷⁶, R⁷⁵ and R⁷⁷, R⁷⁶ and R⁷⁸ or R⁷⁷ and R⁷⁹ are preferably linked to each other to form a ring.

A ring formed by linking the substituents P of the methine groups to each other is preferably a ring from a 5- to an 8-membered ring, more preferably a ring from a 5-to 7-membered ring, and still more preferably a 5- or 6-membered ring. The ring formed by linking the substituents P of the methine group to each other is formed by partially sharing with the methine chain, and may or may not have an unsaturated bond in a moiety other than the moiety shared with the methine chain. Preferably, the ring formed by linking the substituents P of the methine group to each other is free of an unsaturated bond other than the moiety shared with the methine chain.

The ring formed by linking the substituents P of the methine groups to each other may have a substituent, and examples of such a substituent include an organic group and a polar functional group. For details of the organic group, reference is made to the descriptions of the organic groups of the substituent P described above. Examples of the polar functional group include a halogeno group, a hydroxyl group, a nitro group, and a sulfo group (sulfonic acid group), and the halogeno group is preferable. Among these, the substituent of the ring formed by linking the substituents P to each other, which is a halogeno group, an alkyl group, an alkoxy group, an aryl group, and an amino group, is preferable. In this case, the alkyl group and the alkoxy group each contain preferably from 1 to 5 carbon atoms, more preferably from 1 to 3 carbon atoms, and still more preferably 1 or 2 carbon atoms, and the aryl group preferably contains from 6 to 12 carbon atoms.

The substituent P that the methine group may have is preferably bonded to the methine group at the meso position (center) or adjacent thereto, and the other methine groups other than that preferably has no substituent. In Formula (1A), R⁷¹ to R⁷³ may be hydrogen atoms, organic groups, or polar functional groups. In Formula (1B), R⁷² to R⁷⁴ may be hydrogen atoms, organic groups, or polar functional groups, and R⁷¹ and R⁷⁵ are preferably hydrogen atoms. In Formula (1C), R⁷³ to R⁷⁵ may be hydrogen atoms, organic groups, or polar functional groups, and R⁷¹, R⁷², R⁷⁶ and R⁷⁷ are preferably hydrogen atoms. In Formula (1D), R⁷⁴ to R⁷⁶ may be hydrogen atoms, organic groups, or polar functional groups, and R⁷¹ to R⁷³ and R⁷⁷ to R⁷⁹ are preferably hydrogen atoms. It is more preferable that substituents that are linked to each other not to form a ring are bonded to the methine group at the meso position, and substituents that are linked to each other to form a ring are bonded to a methine group adjacent to the methine group at the meso position and linked to each other. It is also preferable that the methine chain L is free of substituents.

In Formula (1), A⁺ and A represent a group bonded to the methine chain L. In the cyanine compound represented by Formula (1), a π electron system preferably extends from the methine chain L to A⁺ and A, and A⁺ and A are preferably groups forming such a π electron system. A⁺ and A are preferably groups represented by the following Formula (2) to Formula (7).

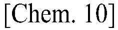

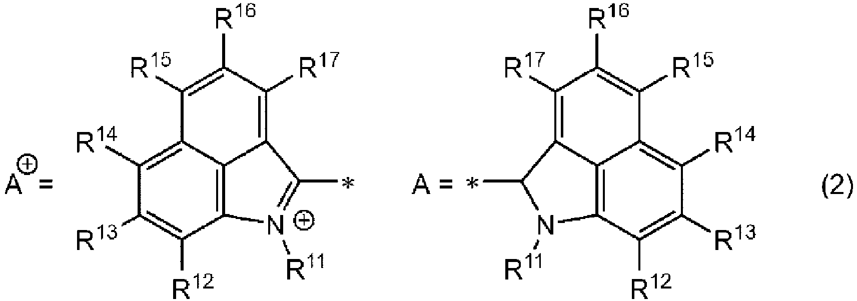

In Formula (2), R¹¹ represents an organic group, R¹² to R¹⁷ each independently represent a hydrogen atom, a halogen atom, or an organic group, and * represents a site of bonding to the methine chain L of Formula (1).

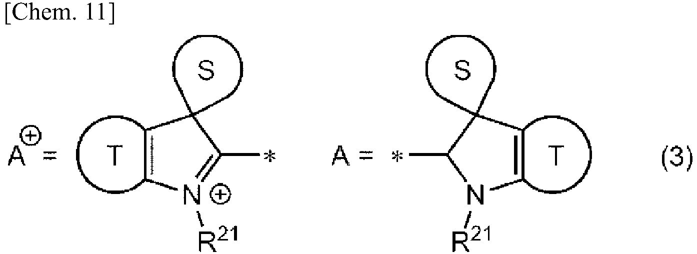

In Formula (3), R²¹ represents an organic group, the ring S represents a hydrocarbon ring having a condensed ring structure optionally having a substituent, or a heterocyclic ring having a condensed ring structure optionally having a substituent, the ring S being spiro-bonded to an adjacent pyrrole ring, a ring T represents an aromatic hydrocarbon ring optionally having a substituent, an aromatic heterocyclic ring optionally having a substituent, or a condensed ring including these ring structures optionally having a substituent, and * represents a site of bonding to the methine chain L of Formula (1).

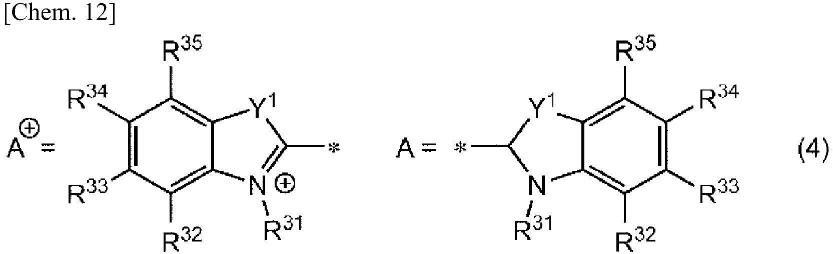

In Formula (4), R³¹ represents an organic group, R³² to R³⁵ each independently represent a hydrogen atom, a halogen atom, or an organic group, or R³² and R³³, R³³ and R³⁴, and R³⁴ and R³⁵ may be linked to each other to form a ring, Y¹ represents an oxygen atom, a sulfur atom, CH=CH, or CR³⁶R³⁷, where R³⁶ and R³⁷ each represent an organic group, and * represents a site of bonding to the methine chain L of Formula (1).

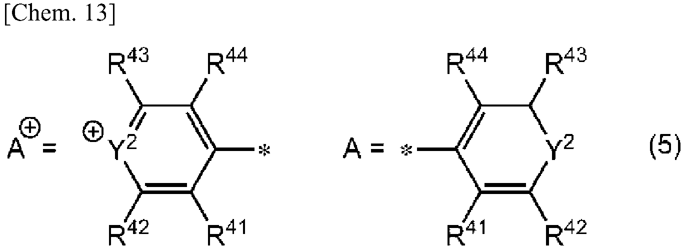

In Formula (5), R⁴¹ to R⁴⁴ each independently represent a hydrogen atom, a halogen atom, or an organic group, or R⁴¹ and R⁴², and R⁴³ and R⁴⁴ may be linked to each other to form a ring, Y² represents an oxygen atom, a sulfur atom, or NR⁴⁵, where R⁴⁵ represents an organic group, and * represents a site of bonding to the methine chain L of Formula (1).

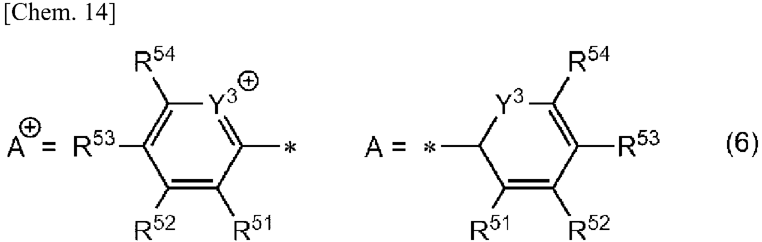

In Formula (6), R⁵¹ to R⁵⁴ each independently represent a hydrogen atom, a halogen atom, or an organic group, Y³ represents an oxygen atom, a sulfur atom, or NR⁵⁵, where R⁵⁵ represents an organic group, and * represents a site of bonding to the methine chain L of Formula (1).

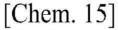

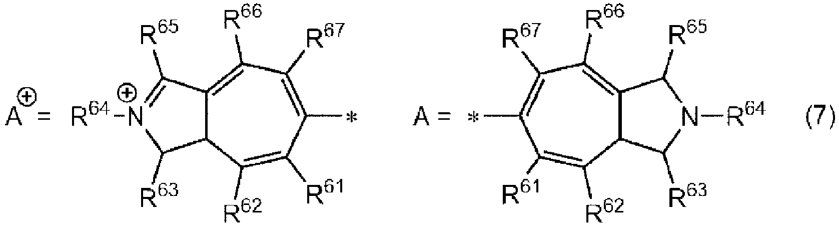

In Formula (7), R⁶¹ to R⁶³ and group from R⁶⁵ to R⁶⁷ each independently represent a hydrogen atom, a halogen atom, or an organic group, R⁶⁴ represents an organic group, and * represents a site of bonding to the methine chain L of Formula (1).

In Formula (2) to Formula (7), examples of the halogen atom (halogeno group) of R¹² to R¹⁷, R³² to R³⁵, R⁴¹ to R⁴⁴, R⁵¹ to R⁵⁴, R⁶¹ to R⁶³, and R⁶⁵ to R⁶⁷ include a fluorine atom (fluoro group), a chlorine atom (chloro group), a bromine atom (bromo group), and an iodine atom (iodo group). For details of the organic groups of R¹¹ to R¹⁷, R²¹, R³¹ to R³⁵, R⁴¹ to R⁴⁴, R⁵¹ to R⁵⁵, and R⁶¹ to R⁶⁷, reference is made to the above-described descriptions of the organic groups of the substituent P.

In Formula (2), R¹¹ is preferably an alkyl group, an aryl group, or an aralkyl group, and more preferably the alkyl group. An example of the alkyl group includes a linear or branched alkyl group, and the linear alkyl group is more preferable. The alkyl group of R¹¹ contains preferably 3 or more carbon atoms, and more preferably 4 or more carbon atoms, and preferably 12 or less carbon atoms, more preferably 10 or less carbon atoms, and still more preferably 8 or less carbon atoms.

In Formula (2), R¹² to R¹⁷ are preferably hydrogen atoms, halogen atoms, alkyl groups, alkoxy groups, aryl groups, aryloxy groups, aralkyl groups, and amino groups, more preferably hydrogen atoms, halogen atoms, alkyl groups, or alkoxy groups, and still more preferably hydrogen atoms, alkyl groups, or alkoxy groups. The alkyl group and the alkoxy group each contain preferably from 1 to 8 carbon atoms, more preferably from 1 to 5 carbon atoms, and still more preferably from 1 to 3 carbon atoms, the aryl group and the aryloxy group each contain preferably from 6 to 12 carbon atoms, and more preferably from 6 to 10 carbon atoms, and the aralkyl group contains preferably from 7 to 13 carbon atoms, and more preferably from 7 to 11 carbon atoms.

In Formula (3), R²¹ is preferably an alkyl group, an aryl group, or an aralkyl group, and more preferably an alkyl group. An example of the alkyl group includes a linear or branched alkyl group, and the linear alkyl group is more preferable. Moreover, the alkyl group of R²¹ contains preferably from 1 to 12 carbon atoms, more preferably from 1 to 6 carbon atoms, and still more preferably from 1 to 3 carbon atoms, with a methyl group or an ethyl group being particularly preferred.

In Formula (3), the ring S represents a hydrocarbon ring having a condensed ring structure or a heterocyclic ring having a condensed ring structure. The hydrocarbon ring and the heterocyclic ring of the ring S may or may not have aromaticity. The number of membered rings of the ring S is not particularly limited, but the number of membered rings of a hydrocarbon ring or a heterocyclic ring spiro-bonded to an adjacent pyrrole ring is preferably from 5 to 8, more preferably from 5 to 7, and still more preferably 5 or 6. Examples of the hydrocarbon ring having a condensed ring structure or the heterocyclic ring having a condensed ring structure of the ring S include an indene ring, a naphthalene ring, an anthracene ring, a fluorene ring, a benzofluorene ring, an indole ring, an isoindole ring, a benzimidazole ring, a quinoline ring, a benzopyran ring, an acridine ring, a xanthene ring, a carbazole ring, a purine ring, and a pteridine ring.

In the cyanine compound having the group A⁺ and the group A represented by Formula (3), the ring S is spiro-bonded to an adjacent pyrrole ring and therefore is twisted and bonded to the pyrrole ring. This causes molecular strain of the cyanine compound, which affects the band gap, and thus the absorption wavelength can be intended to be increased. In addition, association or aggregation of the cyanine compound is suppressed, improving the solubility in an organic solvent or a resin.

The hydrocarbon ring or the heterocyclic ring of the ring S may have a substituent, and examples of such a substituent include an organic group and a polar functional group. For details of these organic groups and polar functional groups, reference is made to the descriptions of the organic groups of the substituent P and the polar functional groups described above. For the substituent that the ring S may have, an alkyl group, an alkoxy group, an alkylthio group, an alkoxycarbonyl group, an aryl group, an aryloxycarbonyl group, and a halogeno group are preferable, an alkyl group, an alkoxy group, an alkylthio group, a halogeno group, and an aryl group are preferable, and an alkyl group, an alkoxy group, and a halogeno group are more preferable.

The ring S preferably has a π bond, and specifically, the hydrocarbon ring or the heterocyclic ring spiro-bonded to a pyrrole ring preferably has a π bond. This facilitates the entire ring S to be twisted with respect to the pyrrole ring, making it possible to increase the molecular strain of the cyanine compound. In this case, it is preferable that an atom adjacent to the carbon spiro-bonded to the pyrrole ring and an atom two atoms away therefrom are bonded to each other through a π bond. Examples of the π bond include a double bond, and examples thereof include a double bond between a carbon atom and a carbon atom, a double bond between a carbon atom and a nitrogen atom, and a double bond between a nitrogen atom and a nitrogen atom. The π bond of the hydrocarbon ring or the heterocyclic ring spiro-bonded to an adjacent pyrrole ring of the ring S may partially share a condensed ring.

In the ring S, the condensed ring is preferably formed so as to share a bond between an atom adjacent to the carbon spiro-bonded to the pyrrole ring and an atom two atoms away therefrom. This allows the ring S to be formed in a bulky manner in a state of being twisted with respect to the pyrrole ring, and the molecular strain of the cyanine compound can be increased.

The ring S is particularly preferably a hydrocarbon ring having a condensed ring structure or a heterocyclic ring having a condensed ring structure represented by the following Formula (8-1) to Formula (8-4). In Formula (8-1) to Formula (8-4), a ring U¹ to a ring U⁶ each independently represent a hydrocarbon ring optionally having a substituent, Y¹¹ represents -CH₂-, -NH-, -O-, or -S-, Y¹² to Y¹⁶ each independently represent -CH₂-, -CH=, -NH-, -N=, -O-, or -S-, and * represents a site spiro-bonded to the adjacent pyrrole ring. For substituents that the ring U¹ to the ring U⁶ may have, reference is made to the descriptions of the substituents that the ring S may have described above.

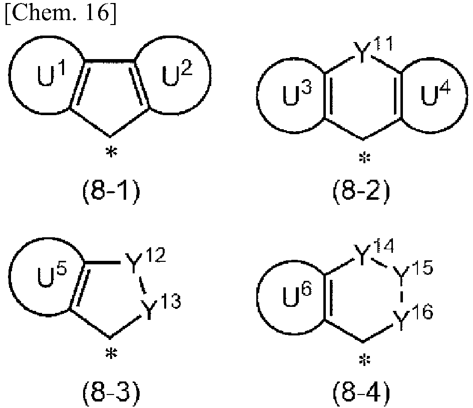

Examples of the hydrocarbon rings of the ring U¹ to the ring U⁶ include an aromatic hydrocarbon ring and an aliphatic hydrocarbon ring. Examples of the aromatic hydrocarbon ring include a benzene ring, a naphthalene ring, a phenanthrene ring, an anthracene ring, and a fluoranthene ring. The aromatic hydrocarbon ring may have a single ring structure, or may be a ring structure in which two or more ring structures are condensed. Examples of the aliphatic hydrocarbon ring include monocyclic cycloalkanes having from 3 to 10 carbon atoms such as cyclopentane, cyclohexane, and cycloheptane; and monocyclic cycloalkenes having from 3 to 10 carbon atoms such as cyclopentene, cyclopentadiene, cyclohexene, cyclohexadiene (for example, 1, 3-cyclohexadiene), cycloheptene, and cycloheptadiene. The ring U¹ to the ring U⁶ are preferably monocyclic, and specifically, a monocyclic cycloalkene having from 3 to 10 carbon atoms (preferably from 5 to 8 carbon atoms) or a benzene ring is preferable, and a benzene ring (specifically, a benzene ring condensed with a 5-membered ring or a 6-membered ring spiro-bonded at the * site) is more preferable.

In Formula (3), a ring T represents an aromatic hydrocarbon ring, an aromatic heterocyclic ring, or a condensed ring including ring structures thereof, and these ring structures may have a substituent. The cyanine compound has the ring T, and thus a π electron system spreads over a wide range from the methine chain L to the ring T through the pyrrole ring, and the absorption wavelength can be intended to be increased.

The aromatic hydrocarbon ring of the ring T is not particularly limited as long as it is a ring structure composed of carbon atoms and hydrogen atoms and having aromaticity, and examples thereof include a benzene ring, a naphthalene ring, a phenanthrene ring, an anthracene ring, and a fluoranthene ring. The aromatic hydrocarbon ring may have a single ring structure, or may be a ring structure in which two or more ring structures are condensed. The aromatic heterocyclic ring of the ring T is not particularly limited as long as it includes one or more atoms selected from N (nitrogen atom), O (oxygen atom) and S (sulfur atom) in the ring structure and has aromaticity, and examples thereof include a furan ring, a thiophene ring, a pyrrole ring, a pyrazole ring, an oxazole ring, a thiazole ring, an imidazole ring, a pyridine ring, a pyridazine ring, a pyrimidine ring, a pyrazine ring, a purine ring, and a pteridine ring. The aromatic heterocyclic ring may have a single ring structure, or may be a ring structure in which two or more ring structures are condensed. The condensed ring including these ring structures has a structure in which the aromatic hydrocarbon ring and the aromatic heterocyclic ring are condensed, and examples thereof include an indole ring, an isoindole ring, a benzimidazole ring, a quinoline ring, a benzopyran ring, an acridine ring, a xanthene ring, and a carbazole ring.

The ring T may have a substituent, and examples of such a substituent include an organic group and a polar functional group. For details of these organic groups and polar functional groups, reference is made to descriptions of the organic groups of the substituent P and the polar functional groups described above. The substituent that the ring T may have, which is an alkyl group, an alkoxy group, an alkylthio group, an alkoxycarbonyl group, an aryl group, an aryloxycarbonyl group, an amino group, a cyano group, a halogeno group, and a nitro group are preferable, and an alkyl group, an alkoxy group, an alkylthio group, a halogeno group, and an aryl group are more preferable. In a case where the ring T has a substituent, the number of the substituents is preferably from 1 to 5, more preferably from 1 to 3, and still more preferably 1 or 2. When the ring T has a plurality of substituents, the plurality of substituents may be the same or different. The ring T may be free of a substituent.

The number of π electrons contained in the ring T, that is, the number of π electrons contained in the above-described aromatic hydrocarbon ring, aromatic heterocyclic ring, or condensed ring including these ring structures is not particularly limited, and may be, for example, 4 or more, or 6 or more. The upper limit of the number of π electrons contained in the ring T is not particularly limited, but is preferably 18 or less, more preferably 14 or less, and still more preferably 10 or less. Incidentally, the number of π electrons contained in the ring T is the number of electrons including π electrons contained in the carbon-carbon bond shared by the ring T and the pyrrole ring. From the viewpoint of ease of production of the cyanine compound, the ring T is preferably an aromatic hydrocarbon ring and particularly preferably a benzene ring or a naphthalene ring.

In Formula (4), R³¹ is preferably an alkyl group, an aryl group, or an aralkyl group and more preferably an alkyl group. An example of the alkyl group includes a linear or branched alkyl group, and the linear alkyl group is more preferable. The alkyl group of R¹¹ contains preferably 3 or more carbon atoms, and more preferably 4 or more carbon atoms, and preferably 12 or less carbon atoms, more preferably 10 or less carbon atoms, and still more preferably 8 or less carbon atoms.

In Formula (4), in a case where R³² to R³⁵ are independent groups, R³² to R³⁵ are each independently preferably a hydrogen atom, a halogen atom, an alkyl group, an alkoxy group, an aryl group, an aryloxy group, an aralkyl group, or an amino group, more preferably a hydrogen atom, a halogen atom, an alkyl group, or an alkoxy group, and still more preferably a hydrogen atom, an alkyl group, or an alkoxy group. The alkyl group and the alkoxy group each contain preferably from 1 to 8 carbon atoms, more preferably from 1 to 5 carbon atoms, and still more preferably from 1 to 3 carbon atoms, the aryl group and the aryloxy group each contain preferably from 6 to 12 carbon atoms, and more preferably from 6 to 10 carbon atoms, and the aralkyl group contains preferably from 7 to 13 carbon atoms, and more preferably from 7 to 11 carbon atoms.

In Formula (4), examples of each ring formed by linking R³² and R³³, R³³ and R³⁴, and R³⁴ and R³⁵ to each other (hereinafter, referred to as "ring R") include a hydrocarbon ring and a heterocyclic ring, and these ring structures may or may not have aromaticity. Examples of the ring R include an aromatic hydrocarbon ring, an aromatic heterocyclic ring, a non-aromatic hydrocarbon ring, and a non-aromatic heterocyclic ring. The number of membered rings of the ring R is preferably from 5 to 8, more preferably from 5 to 7, and still more preferably 5 or 6.

For the aromatic hydrocarbon and the aromatic heterocyclic ring of the ring R, reference is made to the description of the ring T described above. An example of the non-aromatic hydrocarbon ring of the ring R includes an aliphatic hydrocarbon ring, and examples thereof include monocyclic cycloalkanes having from 3 to 10 carbon atoms such as cyclopentane, cyclohexane, and cycloheptane; monocyclic cycloalkenes having from 3 to 10 carbon atoms such as cyclopentene, cyclopentadiene, cyclohexene, cyclohexadiene (for example, 1, 3-cyclohexadiene), cycloheptene, and cycloheptadiene. An example of the non-aromatic heterocyclic ring of the ring R includes a ring in which one or more carbon atoms constituting the ring of the aliphatic hydrocarbon ring are replaced by at least one or more atoms selected from N (nitrogen atom), S (sulfur atom), and O (oxygen atom). Examples of the non-aromatic heterocyclic ring include a pyrrolidine ring, a tetrahydrofuran ring, a tetrahydrothiophene ring, a piperidine ring, a tetrahydropyran ring, a tetrahydropyran ring, a morpholine ring, a hexamethyleneimine ring, a hexamethylene oxide ring, a hexamethylene sulfide ring, and a heptamethyleneimine ring. The ring R may have a condensed ring structure condensed with another ring, and examples of such a ring structure include an indene ring, a fluorene ring, a benzofluorene ring, an indole ring, an isoindole ring, a benzimidazole ring, a quinoline ring, a benzopyran ring, an acridine ring, a xanthene ring, a carbazole ring, a purine ring, and a pteridine ring.

The ring R may have a substituent, and examples of the substituent include an organic group and a polar functional group. For details of these organic groups and polar functional groups, reference is made to the descriptions of the organic groups of the substituent P and the polar functional groups described above. The polar functional group is preferably a halogeno group. When the ring R has a plurality of substituents, the plurality of substituents may be the same or different. The ring R may be free of a substituent.

In Formula (4), when Y¹ represents CH=CH, the group A⁺ and the group A have a quinoline backbone. When Y¹ represents CR³⁶R³⁷, for the details of organic groups of R³⁶ and R³⁷, reference is made to the descriptions of the organic groups of the substituent P described above. R³⁶ and R³⁷ are each independently preferably a hydrogen atom, a halogen atom, an alkyl group, an alkoxy group, an aryl group, an aralkyl group, or an amino group, and more preferably a hydrogen atom, an alkyl group, an aryl group, or an aralkyl group. The alkyl group and the alkoxy group each contain preferably from 1 to 8 carbon atoms, more preferably from 1 to 5 carbon atoms, and still more preferably from 1 to 3 carbon atoms, the aryl group contains preferably from 6 to 12 carbon atoms, more preferably from 6 to 10 carbon atoms, and the aralkyl group contains preferably from 7 to 13 carbon atoms, and more preferably from 7 to 11 carbon atoms.

In Formula (5), in a case where R⁴¹ to R⁴⁴ are independent groups, R⁴¹ to R⁴⁴ are each independently preferably a hydrogen atom, a halogen atom, an alkyl group, an alkoxy group, an aryl group, an aryloxy group, an aralkyl group, or an amino group, more preferably a hydrogen atom, a halogen atom, an alkyl group, or an alkoxy group, and still more preferably a hydrogen atom, an alkyl group, or an alkoxy group. The alkyl group and the alkoxy group each contain preferably from 1 to 8 carbon atoms, more preferably from 1 to 5 carbon atoms, and still more preferably from 1 to 3 carbon atoms, the aryl group and the aryloxy group each contain preferably from 6 to 12 carbon atoms, and more preferably from 6 to 10 carbon atoms, and the aralkyl group preferably contains from 7 to 13 carbon atoms, and more preferably from 7 to 11 carbon atoms.

In Formula (5), when R⁴¹ and R⁴², and R⁴³ and R⁴⁴ are linked to each other to form a ring, for each ring, reference is made to the description of the ring R described above.

In Formula (5), when Y² represents NR⁴⁵, for the details of an organic group of R⁴⁵, reference is made to the descriptions of the organic groups of the substituent P described above. R⁴⁵ is preferably a hydrogen atom, an alkyl group, an aryl group, or an aralkyl group, and more preferably a hydrogen atom or an alkyl group. The alkyl group contains preferably from 1 to 8 carbon atoms, more preferably from 1 to 5 carbon atoms, and still more preferably from 1 to 3 carbon atoms, the aryl group contains preferably from 6 to 12 carbon atoms, and more preferably from 6 to 10 carbon atoms, and the aralkyl group contains preferably from 7 to 13 carbon atoms, and more preferably from 7 to 11 carbon atoms.

In Formula (6), in a case where R⁵¹ to R⁵⁴ are independent groups, R⁵¹ to R⁵⁴ are each independently preferably a hydrogen atom, a halogen atom, an alkyl group, an alkoxy group, an aryl group, an aryloxy group, an aralkyl group, or an amino group, more preferably a hydrogen atom, a halogen atom, an alkyl group, or an alkoxy group, and still more preferably a hydrogen atom, an alkyl group, or an alkoxy group. The alkyl group and the alkoxy group each contain preferably from 1 to 8 carbon atoms, more preferably from 1 to 5 carbon atoms, and still more preferably from 1 to 3 carbon atoms, the aryl group and the aryloxy group each contain preferably from 6 to 12 carbon atoms, and more preferably from 6 to 10 carbon atoms, and the aralkyl group contains preferably from 7 to 13 carbon atoms, and more preferably from 7 to 11 carbon atoms.

In Formula (6), when Y³ represents NR⁵⁵, for the details of an organic group of R⁵⁵, reference is made to the description of the organic group of the substituent P described above. R⁵⁵ is preferably a hydrogen atom, an alkyl group, an aryl group or an aralkyl group, and more preferably a hydrogen atom or an alkyl group. The alkyl group contains preferably from 1 to 8 carbon atoms, more preferably from 1 to 5 carbon atoms, and still more preferably from 1 to 3 carbon atoms, the aryl group contains preferably from 6 to 12 carbon atoms, and more preferably from 6 to 10 carbon atoms, and the aralkyl group contains preferably from 7 to 13 carbon atoms, and more preferably from 7 to 11 carbon atoms.

In Formula (7), when R⁶¹ to R⁶⁷ are independent groups, R⁶¹ to R⁶⁷ are each independently preferably a hydrogen atom, a halogen atom, an alkyl group, an alkoxy group, an aryl group, an aryloxy group, an aralkyl group, or an amino group, more preferably a hydrogen atom, a halogen atom, an alkyl group, or an alkoxy group, and still more preferably a hydrogen atom, an alkyl group, or an alkoxy group. The alkyl group and the alkoxy group each contain preferably from 1 to 8 carbon atoms, more preferably from 1 to 5 carbon atoms, and still more preferably from 1 to 3 carbon atoms, the aryl group and the aryloxy group each contain preferably from 6 to 12 carbon atoms, and more preferably from 6 to 10 carbon atoms, the aralkyl group contains preferably from 7 to 13 carbon atoms, and more preferably from 7 to 11 carbon atoms.

In Formula (1), X⁻ represents a monovalent anion whose conjugate acid has a pKa of -8.0 or less. In the cyanine compound of the present invention, a cation having a cyanine backbone forms a salt with a monovalent anion whose conjugate acid has a pKa of -8.0 or less. This makes it possible to increase the solubility of the cyanine compound in a resin.

Examples of the acid having a pKa of -8.0 or less include acids having a pKa of -8.0 or less described in Table 1 of Agnes Kutt et al., "Equilibrium Acidities of Super acids", J.Org.Chem., 76, pp 391 to 395 (2011). When the pKa is known from a literature, the value is quoted, and when the pKa is not known, a calculated value obtained using Advanced Chemistry Development (ACD/Labs) Software can be adopted. The pKa of the conjugate acid of the anion of X⁻ is preferably -10.0 or less, more preferably -11.0 or less, and still more preferably -18.0 or less. The anion of X⁻is preferably a low nucleophilic anion, and is preferably an anion formed when an acid having a low pKa, which is generally called a super acid, dissociates a proton.

Examples of the anion for X⁻ include anions represented by Formula (9-1) to Formula (9-3) set forth below. In Formula (9-1) to Formula (9-3), R⁸¹ to R⁸⁷ each independently represent a fluorine atom, a fluoroalkyl group, a fluoroaryl group, or a cyano group, R⁸⁸ and R⁸⁹ each independently represent a fluorine atom, a fluoroalkyl group, a fluoroaryl group, a cyano group, or -SO₂-R⁹⁰, and R⁹⁰ represents a fluorine atom, a fluoroalkyl group, a fluoroaryl group, or a cyano group.

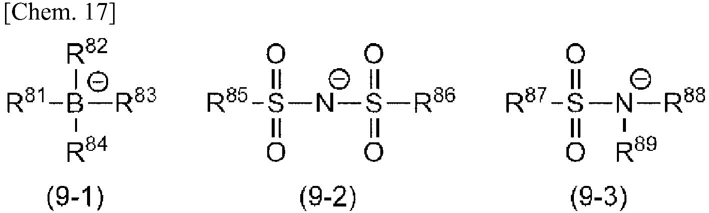

The anion of X⁻ may be, in addition to the anions of Formula (9-1) to Formula (9-3), a perchlorate ion, a fluorosulfonate ion, a fluoroalkylsulfonate ion, a cyanoalkylsulfonate ion, a 2,4,6-trinitrobenzenesulfonate ion, a 1,1,3,3-tetracyanoallyl ion, a fluorophosphate ion, or a fluoroantimonate ion.

In Formula (9-1) to Formula (9-3), examples of the fluoroalkyl groups of R⁸¹ to R⁹⁰ include a linear, branched, or cyclic fluoroalkyl group, and those are preferably linear or branched, and more preferably linear. The fluoroalkyl group contains preferably from 1 to 8 carbon atoms, more preferably from 1 to 6 carbon atoms, and still more preferably from 1 to 4 carbon atoms and is preferably a perfluoroalkyl group. The fluoroaryl group of R⁸¹ to R⁹⁰ contains preferably from 6 to 12 carbon atoms, and more preferably from 6 to 10 carbon atoms, and the fluoroaryl group is preferably a perfluoroaryl group. In the description described above, the fluoroalkylsulfonate ion, fluorophosphate ion, and fluoroantimonate ion exemplified as anions other than the anions of Formula (9-1) to Formula (9-3) are preferably a perfluoroalkylsulfonate ion, a hexafluorophosphate ion, and a hexafluoroantimonate ion, respectively. The alkyl group of the perfluoroalkylsulfonate ion contains preferably from 1 to 8 carbon atoms, more preferably from 1 to 6 carbon atoms, and still more preferably from 1 to 4 carbon atoms.

The anion of X⁻ is preferably the anion represented by Formula (9-1), that is, a borate ion, as a result of which the solubility of the cyanine compound in a resin can be further enhanced. In this case, R⁸¹ to R⁸⁴ are more preferably fluoroalkyl groups, fluoroaryl groups, or cyano groups, still more preferably fluoroalkyl groups or fluoroaryl groups, and particularly preferably fluoroaryl groups. Examples of the borate ion whose conjugate acid has a pKa of -8.0 or less and which has a fluoroaryl group include a tetrakis(pentafluorophenyl) borate anion (the conjugate acid has a pKa of approximately -30).

The cyanine compound to be used in the present invention preferably has an average transmittance of 81% or more in a range of wavelengths from 380 nm to 780 nm when a transmittance at the absorption maximum wavelength is 10% in a range of wavelengths from 300 nm to 1300 nm. Accordingly, the cyanine compound transmits light in the visible light region with a high transmittance, and the material for laser welding is substantially free from coloration derived from the cyanine compound. The average transmittance of the cyanine compound in the range of wavelengths from 380 nm to 780 nm is more preferably 85% or more and still more preferably 88% or more.

The cyanine compound preferably has an absorption maximum wavelength in the range of wavelengths from 750 nm to 1300 nm. Specifically, the cyanine compound preferably has an absorption peak having an absorption maximum in the range of wavelengths from 600 nm to 1300 nm in an absorption spectrum in the range of wavelengths from 750 nm to 1300 nm, and the absorption maximum of the absorption peak preferably has a maximum value in the range of wavelengths from 600 nm to 1300 nm. The absorption maximum wavelength of the cyanine compound may be 780 nm or more, 800 nm or more, 850 nm or more, 900 nm or more, or 1000 nm or more, and may be 1280 nm or less, 1200 nm or less, 1150 nm or less, or 1100 nm or less.

The cyanine compound has a half-value width of the absorption peak giving the absorption maximum wavelength of preferably 40 nm or more, more preferably 45 nm or more, and still more preferably 50 nm or more. This makes it possible to absorb laser light in a wide wavelength range, and various types of laser light can be used in laser welding. The cyanine compound has a half-value width of the absorption peak giving the absorption maximum wavelength of, on the other hand, preferably 100 nm or less, more preferably 80 nm or less, and still more preferably 60 nm or less. This facilitates enhancement of a transmittance of light in the visible light region.

The absorption spectrum of the cyanine compound described above means an absorption spectrum of the cyanine compound in chloroform. Also, the half-value width means a width of the absorption peak at a transmittance of 50% when a transmittance at the absorption maximum wavelength is 10%.

The resin to be used for the material for laser welding is not particularly limited as long as the resin is melted when irradiated with laser light and members can be welded to each other, but is preferably a thermoplastic resin. This allows the resin of the material for laser welding to be melted when irradiated with laser light, facilitating members to be welded to each other. The resin is not only a completely polymerized resin, but also a resin raw material (including a precursor of the resin, a raw material of the precursor, and the monomer constituting the resin), and a resin that is incorporated into the resin by a polymerization reaction or a crosslinking reaction upon use can also be used.

Examples of the resin to be used for the material for laser welding include a (meth)acrylic-based resin, a (meth)acrylic urethane resin, a polyacrylic acid and a salt thereof, polyacrylamide, a polyvinyl chloride-based resin, a polyvinylidene dichloride resin, polyvinylpyrrolidone, a polyolefin resin (for example, a polyethylene resin and a polypropylene resin), a cycloolefin-based resin, polyethyleneimine, a melamine resin, a polyurethane resin, a polystyrene resin, polyvinyl acetate, a polyamide resin (for example, nylon), an aramid resin, a polyimide resin, a polyamide-imide resin, an alkyd resin, a phenol resin, an epoxy resin, a polyester resin (for example, a polybutylene terephthalate (PBT) resin, a polyethylene terephthalate (PET) resin, and a polyarylate resin), a polysulfone resin, a polyethersulfone resin, polysulfonamide and a salt thereof, a butyral resin, a polycarbonate resin, a polyacetal resin, a polyether-based resin, a polyphenylene sulfide resin, an ABS resin (acrylonitrile butadiene styrene resin), an AS resin (acrylonitrile-styrene copolymer), a styrenemaleic anhydride copolymer, a silicone resin, a modified silicone resin (for example, a (meth)acrylic silicone-based resin, an alkylpolysiloxane-based resin, a silicone urethane resin, a silicone polyester resin, and a silicone acrylic resin), fluorine-based resins (for example, a fluorinated aromatic polymer, polytetrafluoroethylene (PTFE), a perfluoroalkoxy fluororesin (PFA), fluorinated polyaryletherketone (FPEK), fluorinated polyimide (FPI), a fluorinated polyamic acid (FPAA), and a fluorinated polyethernitrile (FPEN)), carboxymethyl cellulose, and a polyethylene glycol. Among these, a polyimide resin, a polyamide-imide resin, a (meth)acrylic-based resin, a cycloolefin-based resin, an epoxy resin, a polyester resin, a polyarylate resin, a polyamide resin, a polycarbonate resin, a polysulfone resin, and a fluorinated aromatic polymer are preferable. These resins have high transparency, and when members are welded to each other by the material for laser welding, the appearance of a welded body can be made favorable.

The polyimide resin is a polymer including an imide bond in a repeating unit of the main chain, and can be produced by, for example, subjecting a tetracarboxylic dianhydride and a diamine to condensation polymerization to obtain a polyamic acid, and dehydrating and cyclizing (imidizing) the polyamic acid. The polyimide resin, which is an aromatic polyimide in which aromatic rings are linked by an imide bond, is preferably used. Examples of the polyimide resin suitable for use include Neopulim (trade name) available from MITSUBISHI GAS CHEMICAL COMPANY, INC., Kapton (trade name) available from DuPont de Nemours, Inc., AURUM (trade name) available from Mitsui Chemicals, Inc., Meldin (trade name) available from Saint-Gobain S.A., and TPS (trade name) TI3000 series available from Toray Plastics Precision Co., Ltd.

The polyamide-imide resin is a polymer including an amide bond and an imide bond in a repeating unit of the main chain. Examples of the polyamide-imide resin that can be used include Torlon (trade name) available from Solvay Advanced Polymers LLC, Vylomax (trade name) available from TOYOBO CO., LTD., and TPS (trade name) TI5000 series available from Toray Plastics Precision Co., Ltd.

The (meth)acrylic-based resin is a polymer having a repeating unit derived from (meth)acrylic acid or a derivative thereof, and for example, a resin having a repeating unit derived from a (meth)acrylic acid ester such as a poly(meth)acrylic acid ester resin is preferably used. The (meth)acrylic-based resin which has a ring structure in the main chain is also preferable, and examples of the ring structure include carbonyl group-containing ring structures such as a lactone ring structure, a glutaric anhydride structure, a glutarimide structure, a maleic anhydride structure, and a maleimide ring structure; and carbonyl group-free ring structures such as an oxetane ring structure, an azetidine ring structure, a tetrahydrofuran ring structure, a pyrrolidine ring structure, a tetrahydropyran ring structure, and a piperidine ring structure. Note that the carbonyl group-containing ring structure also includes a structure containing a carbonyl group derivative group such as an imide group. The (meth)acrylic-based resin having a carbonyl group-containing ring structure, which is, for example, those described in JP 2004-168882 A, JP 2008-179677 A, WO 2005/54311, and JP 2007-31537 A, can be used.

The cycloolefin-based resin is not particularly limited as long as it is a polymer obtained by using a cycloolefin as at least a moiety of monomer components and polymerizing the cycloolefin, the polymer partially having an alicyclic structure in the main chain. The cycloolefin-based resin, which is, for example, TOPAS (trade name) available from POLYPLASTICS CO., LTD., APEL (trade name) available from Mitsui Chemicals, Inc., ZEONEX (trade name) and ZEONOR(trade name) available from Zeon Corporation, and ARTON (trade name) available from JSRCorporation, can be used.

The epoxy resin is a resin that can be cured by crosslinking an epoxy compound (prepolymer) in the presence of a curing agent or a curing catalyst. Examples of the epoxy compound include an aromatic epoxy compound, an aliphatic epoxy compound, a cycloaliphatic epoxy compound, and a hydrogenated epoxy compound, and for example, a fluorene epoxy (OGSOL (trade name) PG-100) available from Osaka Gas Chemicals Co., Ltd., a bisphenol A-type epoxy compound (JER(trade name) 828EL) and a hydrogenated bisphenol A-type epoxy compound (JER(trade name) YX8000) available from Mitsubishi Chemical Corporation, and a cycloaliphatic liquid epoxy compound (CELLOXIDE (trade name) 2021P) available from Daicel Corporation, can be used.

The polyester resin is a polymer including an ester bond in a repeating unit of the main chain, and can be obtained by, for example, subjecting a polyvalent carboxylic acid (dicarboxylic acid) and a polyalcohol (diol) to condensation polymerization. Examples of the polyester resin include polyethylene terephthalate, polybutylene terephthalate, polytrimethylene terephthalate, polyethylene naphthalate, and polybutylene naphthalate, and for example, OKP series available from Osaka Gas Chemicals Co., Ltd., TRN series, Teonex (trade name), available from TEIJIN LIMITED, Raynite (trade name) available from DuPont de Nemours, Inc., Novapex (trade name) available from Mitsubishi Chemical Corporation, NOVADURAN (trade name) available from Mitsubishi Engineering-Plastics Corporation, Lumirror (trade name) and Toraycon (trade name) available from Toray Industries, Inc., and Elitel (trade name) available from UNITIKA LTD., can be used.

The polyarylate resin is a polymer obtained by polycondensation of a dihydric phenol compound and a dibasic acid (for example, an aromatic dicarboxylic acid such as phthalic acid), and has a repeating unit including an aromatic ring and an ester bond in a repeating unit of the main chain. The polyarylate resin, which is, for example, Vectran (trade name) available from Kuraray Co., Ltd., Upolymer (trade name) or UNIFINER (trade name) available from UNITIKA LTD., can be used.

The polyamide resin is a polymer including an amide bond in a repeating unit of the main chain, and can be obtained by, for example, condensation polymerization of a diamine and a dicarboxylic acid. The polyamide resin may have an aliphatic backbone in its main chain, and such an amide resin, which is, for example, nylon can be used. The polyamide resin may have an aromatic backbone, and an aramid resin is known as such a polyamide resin. The aramid resin is suitably used because it has excellent heat resistance and high mechanical strength, and examples thereof include Twaron (trade name) and Teijinconex (trade name) available from TEIJIN LIMITED, and Kevlar (trade name) and Nomex (trade name) available from DuPont de Numours, Inc.

The polycarbonate resin is a polymer containing a carbonate group (-O-(C=O)-O-) in the repeating unit of the main chain. As the polycarbonate resin, Panlite (trade name) and Multilon (trade name) available from TEIJIN LIMITED, Iupilon (trade name) available from Mitsubishi Engineering-Plastics Corporation, Iupizeta (trade name), Novalex (trade name), and XANTAR (trade name) available from MITSUBISHI GAS CHEMICAL COMPANY, INC., SD POLYCA (trade name) available from Sumika Styron Polycarbonate Limited, and TARFLON (trade name) available from Idemitsu Kosan Co., Ltd., can be used.

The polysulfone resin is a polymer having a repeating unit containing an aromatic ring, a sulfonyl group (-SO₂-), and an oxygen atom. Examples of the polysulfone resin that can be used include SUMIKAEXCEL (trade name) PES3600P and PES4100P available from SUMITOMO CHEMICAL COMPANY, LIMITED, and UDEL (trade name) P-1700 available from Solvay Specialty Polymers Japan K.K.

The fluorinated aromatic polymer is a polymer having a repeating unit containing an aromatic ring having one or more fluorine atoms and at least one bond selected from the group consisting of an ether bond, a ketone bond, a sulfone bond, an amide bond, an imide bond, and an ester bond, and among these, a polymer essentially including a repeating unit including an aromatic ring having one or more fluorine atoms and an ether bond is preferable. The fluorinated aromatic polymer, which is, for example, those described in JP 2008-181121 A, can be used.

For the resin, a (meth)acrylic resin including a structural unit having a ring structure in the main chain is also preferably used. Specifically, it is also preferable to use a (meth)acrylic resin including a structural unit having a ring structure in the main chain, the ring structure including at least one selected from the group consisting of a lactone ring structure, a glutarimide structure, and a maleimide structure. When such a (meth)acrylic resin is used, a material for laser welding having excellent transparency can be obtained. In addition, also due to excellent heat resistance, a welded body obtained by welding members to each other with the material for laser welding can stably maintain welding at an elevated temperature.

In the (meth)acrylic resin, when the ring structure included in the main chain is a lactone ring structure, the number of membered rings of the lactone ring structure is not particularly limited, and may be, for example, any one from 4- to 8-membered rings. From the viewpoint of excellent stability of the ring structure, the lactone ring structure is preferably a 5- or 6-membered ring, and more preferably a 6-membered ring.

An example of the structural unit including the lactone ring structure includes a structure represented by the following Formula (10). In the following Formula (10), R⁹¹, R⁹², and R⁹³ each independently represent a hydrogen atom or an organic group.

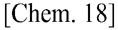

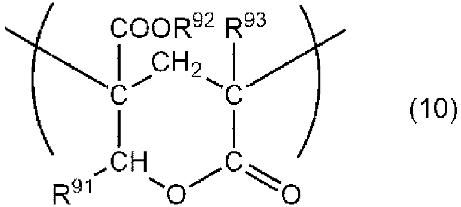

In the lactone ring structural unit of Formula (10), examples of organic groups of R⁹¹, R⁹², and R⁹³ include linear or branched alkyl groups having from 1 to 20 carbon atoms, cycloalkyl groups having from 3 to 20 carbon atoms, alkenyl groups having from 2 to 20 carbon atoms, aryl groups having from 6 to 20 carbon atoms, and aralkyl groups having from 7 to 20 carbon atoms. These groups may have any substituents (for example, a hydroxy group, a carboxyl group, an alkoxy group, or an ester group). Note that, from the viewpoint of ease of production of the (meth)acrylic resin having a lactone ring structure, R⁹¹ and R⁹³ are preferably hydrogen atoms or alkyl groups having from 1 to 6 carbon atoms, and R⁹² is preferably an alkyl group having from 1 to 6 carbon atoms.

In the (meth)acrylic resin, when the ring structure included in the main chain is a glutarimide ring structure, and an example of a structural unit including the glutarimide ring structure includes a structure represented by the following Formula (11). In the following Formula (11), R⁹⁴ and R⁹⁵ each independently represent a hydrogen atom or a methyl group, and R⁹⁶ represents a hydrogen atom, a linear or branched alkyl group having from 1 to 20 carbon atoms, a cycloalkyl group having from 3 to 12 carbon atoms, an aryl group having from 6 to 10 carbon atoms, or an aralkyl group having from 7 to 12 carbon atoms.

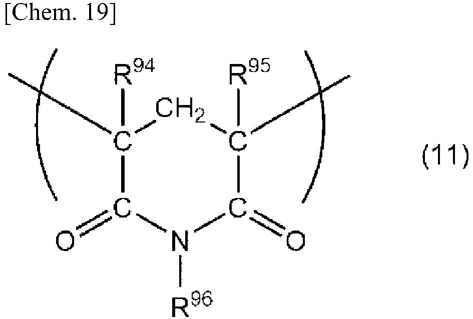

In the (meth)acrylic resin, when the ring structure included in the main chain is a maleimide ring structure, an example of a structural unit including the maleimide ring structure includes a structure represented by the following Formula (12). The ring structural unit of the following Formula (12) is a structural unit derived from maleimide, and can also be referred to as a structural unit including a succinimide structure. In the following Formula (12), R⁹⁷ and R⁹⁸ each independently represent a hydrogen atom or a methyl group, and R⁹⁹ represents a hydrogen atom, a linear or branched alkyl group having from 1 to 20 carbon atoms, a cycloalkyl group having from 3 to 12 carbon atoms, an aryl group having from 6 to 10 carbon atoms, or an aralkyl group having from 7 to 12 carbon atoms.

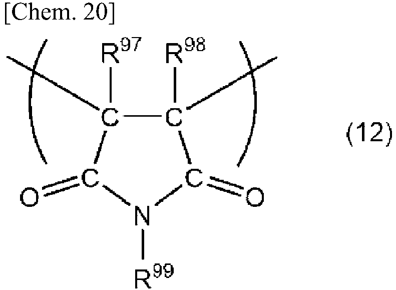

Examples of the structural unit including the maleimide ring structure of Formula (12) include structural units derived from N-methylmaleimide, N-cyclohexylmaleimide, N-phenylmaleimide, and N-benzylmaleimide.

The (meth)acrylic resin including the structural unit having a ring structure in the main chain preferably includes a unit derived from a (meth)acrylic acid ester. Introducing the (meth)acrylic acid ester unit allows the glass transition temperature and the flowability of the (meth)acrylic resin to be adjusted. The content of the structural unit having a ring structure in the main chain in 100 mass% of the (meth)acrylic resin is, for example, preferably 5 mass% or more, more preferably 10 mass% or more, and still more preferably 20 mass% or more, and is preferably 90 mass% or less, more preferably 80 mass% or less, still more preferably 70 mass% or less, and particularly preferably 60 mass% or less. The (meth)acrylic resin including the structural unit having a ring structure in the main chain may include a unit derived from a styrene-based monomer.

The resin may be a resin that transmits visible light or a resin that does not transmit visible light, but from the viewpoint that the favorable appearance of a welded body results from having welded members to each other by laser welding, and from the viewpoint of expansion of the application range of the material for laser welding, the resin preferably has high transparency. For example, the total light transmittance of the resin at a thickness of 0.1 mm thereof is preferably 75% or more, more preferably 80% or more, and still more preferably 85% or more. The upper limit of the total light transmittance of the resin is not particularly limited, and the total light transmittance may be 100% or less, and may be, for example, 95% or less. The total light transmittance is measured based on JIS K 7105.

The glass transition temperature (Tg) of the resin is not particularly limited, but is, for example, preferably 110°C or higher, more preferably 120°C or higher, and still more preferably 130°C or higher, from the viewpoint of increasing the heat resistance of a welded body obtained by welding members to each other with the material for laser welding. The upper limit of the glass transition temperature of the resin is not particularly limited, but is, for example, preferably 380°C or lower, more preferably 300°C or lower, and still more preferably 250°C or lower, from the viewpoint of facilitating laser welding.

The content of the cyanine compound in the material for laser welding is preferably 0.01 mass% or more, more preferably 0.03 mass% or more, and still more preferably 0.05 mass% or more, in 100 mass% of the solids content of the material for laser welding. This allows the cyanine compound included in the material for laser welding to sufficiently generate heat when irradiated with laser light, and the resin is more likely to be melted. As a result, it becomes easy to appropriately weld members to each other by the material for laser welding. The content of the cyanine compound in the material for laser welding is, on the other hand, preferably 20 mass% or less, more preferably 15 mass% or less, and still more preferably 10 mass% or less, in 100 mass% of the solids content of the material for laser welding. This makes it more likely to increase the transparency of the material for laser welding. The solids content of the material for laser welding means the amount of material for laser welding excluding a solvent when the material for laser welding contains the solvent.

The material for laser welding may contain a solvent. Containing a solvent can facilitate application of the material for laser welding. The solvent may function as a solvent for the cyanine compound or may function as a dispersion medium. Examples of the solvent include alcohols such as methanol, ethanol, and isopropyl alcohol; ketones such as acetone, methyl ethyl ketone, methyl isobutyl ketone, and cyclohexanone; glycol derivatives (ether compounds, ester compounds, and ether ester compounds) such as PGMEA (2-acetoxy-1-methoxypropane), ethylene glycol monobutyl ether, ethylene glycol monoethyl ether, and ethylene glycol ethyl ether acetate; amides such as N, N-dimethylacetamide and N, N-dimethylformamide; esters such as ethyl acetate, propyl acetate, and butyl acetate; pyrrolidones such as N-methyl-pyrrolidone (specifically, 1-methyl-2-pyrrolidone); aromatic hydrocarbons such as toluene, xylene, and 1,2,4-trimethylbenzene; aliphatic hydrocarbons such as cyclohexane and heptane; ethers such as tetrahydrofuran, 2-methyltetrahydrofuran, tetrahydropyran, 4-methyltetrahydropyran, dioxane, diethyl ether, and dibutyl ether; halogenated hydrocarbons such as chloroform, dichloromethane, and 1,2-dichloroethane; and a lactone such as γ-butyrolactone. One kind of these solvents may be used, or two or more kinds thereof may be used in combination.

The content of the solvent is preferably, for example, 50 mass% or more, more preferably 70 mass% or more, still more preferably 80 mass% or more, and preferably less than 100 mass% and more preferably 99 mass% or less, in 100 mass% of the material for laser welding. Adjusting the content of the solvent within such a range facilitates the handleability of the material for laser welding to be enhanced.

The material for laser welding may contain two or more types of cyanine compounds. In addition, as long as the desired performance of the material for laser welding is secured, a pigment other than the cyanine compound may be contained, and for example, at least one selected from a near-infrared absorbing pigment, a visible light absorbing pigment, and an ultraviolet absorbing pigment may be contained. The material for laser welding may contain various additives such as a dispersant, a plasticizer, a surfactant, a viscosity modifier, a defoaming agent, a preservative, and a specific resistance modifier, as necessary.

The material for laser welding can be produced by mixing the cyanine compound and the resin. From the viewpoint of facilitating homogeneous mixing of the cyanine compound and the resin, it is preferable to mix a cyanine compound solution obtained by dissolving the cyanine compound in a solvent with the resin. In addition, it is preferable that the resin and the solvent are preliminarily mixed and then mixed with the cyanine compound solution to produce the material for laser welding.

In a difference spectrum obtained using transmittances of the material for laser welding and the resin composition excluding the cyanine compound from the material for laser welding in the range of wavelengths from 300 nm to 1300 nm, the average transmittance in the range of wavelengths from 380 nm to 780 nm is preferably 81% or more when the transmittance at the absorption maximum wavelength is 10%. Accordingly, the material for laser welding transmits light in the visible light region with a high transmittance, and is transparent and excellent in invisibility. The average transmittance in the range of wavelengths from 380 nm to 780 nm in the difference spectrum is more preferably 85% or more and still more preferably 88% or more.

The difference spectrum can be determined by measuring a transmission spectrum of the material for laser welding and a transmission spectrum of a resin composition excluding the cyanine compound from the material for laser welding, subjecting the transmission spectra to logarithmic log₁₀ conversion, and subjecting the difference to exponential conversion. Specifically, the transmittance of the difference spectrum can be determined based on the following formula: The transmittance of the difference spectrum (%) = 10^[log₁₀ (the transmittance of the material for laser welding) - log₁₀ (the transmittance of the resin composition)] × 100.

The material for laser welding can be used in, for example, applying to a member to be joined therewith by laser welding. Hereinafter, a member to be bonded by laser welding and to be applied with the material for laser welding is referred to as a "base material". The present invention also provides a laminate having a base material and a light absorbing layer provided on the base material and formed of the material for laser welding.

The base material may be a material that transmits laser light or may be a material that does not transmit laser light. The light absorbing layer can be formed on the base material by forming a coating film of the material for laser welding on the base material and drying or curing the coating film, if necessary. A member to be bonded to the base material (hereinafter referred to as a "bonding member") is brought into contact with the base material on which the light absorbing layer has been formed from the light absorbing layer side, and the light absorbing layer is irradiated with laser light, whereby the cyanine compound included in the light absorbing layer absorbs the energy of the laser light to generate heat, and the resin of the light absorbing layer is melted to be able to weld the base material and the bonding member. That is, the base material and the bonding member can be laser-welded by a step of applying the material for laser welding onto the base material to form a light absorbing layer formed of the material for laser welding, and a step of bringing the bonding member into contact with the base material on which the light absorbing layer has been formed from the light absorbing layer side and irradiating the light absorbing layer with laser light.

Materials of the base material and the bonding member are not particularly limited, but the base material and the bonding member are preferably constituted of a resin from the viewpoint of facilitating firm welding by the material for laser welding. The resin constituting the base material and the bonding member may be the same type as or different type from a resin included in the material for laser welding, but from the viewpoint of more firmly joining the base material and the bonding member and facilitating a joined portion between the base material and the bonding member to be made less noticeable, the base material and the bonding member are preferably composed of the same type of resin as the resin included in the material for laser welding.

Application of the material for laser welding onto a base material can be performed by a known application method such as a spin coating method, a solvent casting method, a roll coating method, a spray coating method, a bar coating method, a dip coating method, a screen printing method, a flexographic printing method, or an inkjet method. The application method of the material for laser welding is not limited thereto, and the application may be performed with, for example, a pen-type applicator (an applicator composed of a container and a pen core). A thickness of the light absorbing layer formed of a coating film of the material for laser welding is not particularly limited, but is, for example, preferably 1 mm or less, more preferably 500 µm or less, still more preferably 300 µm or less, yet still more preferably 100 µm or less, and preferably 0.1 µm or more, more preferably 0.5 µm or more, and still more preferably 1 µm or more.

A laser welder, which is TruDiode (trade name) (laser wavelength: 920-1050 nm) available from Trumpf, WFD series (laser wavelength: 915 nm) available from Han's Laser Technology Industry Group Co., Ltd., PowerWeld2600 (laser wavelength: 980 nm) available from LPKF Laser & Electronics SE, ExactWeld230P available from Coherent Corp., GLX series (laser wavelength: 990 nm) or GL-300 (laser wavelength: 1080 nm) available from Emerson Electric Co., ML-5120 Direct Diode Laser Welder-120W (laser wavelength: 915 nm) available from AMADA CO., LTD., a laser welder available from IPTE Factory Automation n.v., TITAN WELD system (laser wavelength: 980 nm) available from EVlaser s.r.l., a laser welder available from IPG Photonics Corporation, VL-W1 series (laser wavelength: 1070 nm) available from Panasonic Industry Co., Ltd., 200W or 300W (laser wavelength: 1064 nm) available from Mecco, Inc., a laser heating system L16490-343 or a T-SMILS laser heating system L15570 series available from HAMAMATSUPHOTONICS K.K.,

FD2330 (laser wavelength: 808 nm, 940 nm, 980 nm) available from FINE DEVICE Co., Ltd., a semiconductor laser welder LW-D30A/LW-D100 (laser wavelength: 980 nm) available from Nippon Avionics Co., Ltd., a fiber laser processing machine M720A series available from TOWA LASERFRONT CORPORATION, a laser resin welding system LS-W100 (laser wavelength: 940 nm) available from Seidensha Electronics Co.,Ltd., a Galweld type M or type S (laser wavelength: 1070 nm) available from Hiroshima co., ltd.

Irradiation with laser light may be performed from the base material side, and/or from the bonding member side. When the base material side is irradiated with laser light, a base material that transmits laser light is used. In this case, the bonding member may or may not transmit laser light. When the bonding member side is irradiated with laser light, a bonding member that transmits laser light is used. In this case, the base material may or may not transmit laser light.

Examples of the laser light include a solid-state laser, a fiber laser, a semiconductor laser, a gas laser, and a liquid laser, and for example, a YAG laser (wavelengths 1064 nm and 1070 nm), and a semiconductor laser (wavelengths 808 nm, 840 nm, 940 nm, and 980 nm), can be preferably used. The wavelength of the laser light is preferably included in the range from 800 nm to 1300 nm, more preferably from 850 nm to 1200 nm, and still more preferably from 900 nm to 1100 nm. Among these, laser light having a wavelength of 940 nm, 980 nm, or 1070 nm is particularly preferable.

The material for laser welding can also be used in forming an absorbing material for laser welding. Laser welding is usually performed by stacking a transmissive material that transmits laser light and an absorbing material that absorbs laser light and irradiating the transmissive material side with laser light, but the material for laser welding can also be used as a material for forming the absorbing material. The present invention also provides an absorbing material formed of the material for laser welding. The absorbing material can be formed by molding the material for laser welding into any shapes, and for example, the absorbing material can be formed by placing the material for laser welding into a mold and subjecting to drying or curing. In addition, the material for laser welding in a semi-molten state is pressed under pressure or stretched to form a sheet-like absorbing material. The absorbing material formed of the material for laser welding is brought into contact with the transmissive material and irradiated with the laser light from the transmissive material side, or the absorbing material placed in between the transmissive materials is brought into contact therewith, and irradiated with the laser light to be welded onto the transmissive material.

The shapes of the base material and the absorbing material are not particularly limited, but examples thereof include those in plat form, sheet form, granular form, powder form, massive form, particle aggregate form, spherical form, ellipsoidal form, lens form, cube form, columnar form, rod form, cone form, cylindrical form, needle form, fibrous form, hollow fiber form, and porous form. Note that the absorbing material in sheet form is preferable in terms of enabling it to enhance the handleability of the absorbing material and to broaden an application range. By stacking, the absorbing material in sheet form, that is, an absorbing material sheet can be used not only for a curved base material but also for a flat base material. In addition, since the absorbing material sheet can be formed of a material for laser welding that does not contain a solvent, a resin material having low solvent resistance can be used, and the degree of freedom in selecting the resin material is increased. A thickness of the absorbing material sheet is preferably 10 µm or more, more preferably 15 µm or more, and still more preferably 20 µm or more; and is preferably 500 µm or less, more preferably 400 µm or less, and still more preferably 300 µm or less.

The material for laser welding, the light absorbing layer, or the absorbing material preferably has an absorption maximum wavelength in the range of wavelengths from 750 nm to 1300 nm in the absorption spectra in the range of wavelengths from 600 nm to 1300 nm. Specifically, in the absorption spectra in the range of wavelengths from 600 nm to 1300 nm, it is preferable to have an absorption peak having an absorption maximum in the range of wavelengths from 750 nm to 1300 nm, and the absorption maximum of the absorption peak has a maximum value in the range of wavelengths from 600 nm to 1300 nm. The light absorbing layer or the absorbing material having the absorption maximum wavelength in such a range facilitates laser welding by laser light such as a YAG laser or a semiconductor laser, which is usually used in many cases to be appropriately performed. The absorption maximum wavelength of the material for laser welding, the light absorbing layer, or the absorbing material may be 780 nm or more, 800 nm or more, 850 nm or more, 900 nm or more, or 1000 nm or more; and may be 1280 nm or less, 1200 nm or less, 1150 nm or less, or 1100 nm or less.

The light absorbing layer preferably has a transmittance of from 0% to 99% at a wavelength of 1070 nm as a wavelength that is relatively frequently used in laser light. The light absorbing layer may have a transmittance of 1% or more, 2% or more, 3% or more, 5% or more, 10% or more, 20% or more, 30% or more, 40% or more, 50% or more, 60% or more, 70% or more, 80% or more, or 90% or more at a wavelength of 1070 nm.

The light absorbing layer preferably has a transmittance of 0% or more and 99% or less at the absorption maximum wavelength in the range of wavelengths from 750 nm to 1300 nm. The transmittance of the light absorbing layer at the absorption maximum wavelength may be 1% or more, 2% or more, 3% or more, 5% or more, 10% or more, 20% or more, 30% or more, 40% or more, 50% or more, 60% or more, 70% or more, 80% or more, or 90% or more.

The light absorbing layer preferably has an average transmittance of 80% or more in the range of wavelengths from 380 nm to 780 nm. Accordingly, the light absorbing layer transmits light in the visible light region with a high transmittance, and is transparent and excellent in invisibility. Therefore, a joined portion between the base material and the bonding member can be made inconspicuous, enabling the appearance of a welded body in which the base material and the bonding member have been welded to be made favorable. The average transmittance of the light absorbing layer in the range of wavelengths from 380 nm to 780 nm may be 83% or more, or may be 85% or more. In the light absorbing layer, the average transmittance in the range of wavelengths from 380 nm to 780 nm is preferably higher than the transmittance at a wavelength of 1070 nm and is preferably higher than the transmittance at the absorption maximum wavelength in the range of wavelengths from 750 nm to 1300 nm.

The absorbing material formed of the material for laser welding preferably has a transmittance of 0% or more and 99% or less at a wavelength of 1070 nm as a wavelength that is relatively frequently used in laser light. The transmittance of the absorbing material at a wavelength of 1070 nm may be 1% or more, 2% or more, 3% or more, 5% or more, 10% or more, 20% or more, 30% or more, 40% or more, 50% or more, 60% or more, 70% or more, 80% or more, or 90% or more, and may be 98% or less, 97% or less, 95% or less, or 93% or less.

The absorbing material formed of the material for laser welding preferably has a transmittance of 0% or more and 99% or less at the absorption maximum wavelength in the range of wavelengths from 750 nm to 1300 nm. The transmittance of the absorbing material at the absorption maximum wavelength may be 1% or more, 2% or more, 3% or more, 5% or more, 10% or more, 20% or more, 30% or more, 40% or more, 50% or more, 60% or more, 70% or more, 80% or more, or 85% or more, and may be 98% or less, 97% or less, 95% or less, 93% or less, or 90% or less.

The absorbing material formed of the material for laser welding may have a high transmittance of light in the visible light region or may have a low transmittance of light in the visible light region. The average transmittance of the absorbing material formed of the material for laser welding in the range of wavelengths from 380 nm to 780 nm may be 70% or more, 73% or more, or 75% or more. The absorbing material formed of the material for laser welding preferably has a higher average transmittance in the range of wavelengths from 380 nm to 780 nm than the transmittance at a wavelength of 1070 nm and preferably than the transmittance at the absorption maximum wavelength in the range of wavelengths from 750 nm to 1300 nm.

The present application claims the benefit of priority based on the Japanese Patent Application No. 2023-197624, filed in Japan on November 21, 2023. The entire contents of the Japanese Patent Application No. 2023-197624 filed on November 21, 2023 are incorporated herein by reference.

### Examples

Hereinafter, the present invention will be described more specifically by way of Examples, but the present invention is not limited by the following Examples as a matter of course, and can be implemented with appropriate modifications within a range that can be adapted to the gist described above and below, and all of them are included in the technical scope of the present invention.

### (1) Synthesis of Compound

### (1-1) Synthesis Example 1: Synthesis of Cyanine Compound 1

To a 500 mL four-neck flask placed in a water bath were added 21.9 g (0.195mol) of potassium tert-butoxide, 98.1 g of super-dehydrated tetrahydrofuran, 10.8 g (0.065 mol) of fluorene, and 11.5 g (0.13 mol) of ethyl acetate in this order under nitrogen gas flow (10 mL/min) while paying attention to heat generation, and then the mixture was stirred for 3 hours under reflux conditions while heated in a water bath. The resulting reaction liquid was cooled, quenched with dilute hydrochloric acid, then extracted with ethyl acetate, and washed three times with brine. The obtained organic phase was dehydrated over magnesium sulphate and concentrated by an evaporator, and the obtained solid was purified by silica gel column chromatography (developing solvent: ethyl acetate) to obtain 12.5 g of obtain 9-acetyl-9H-fluorene.

A separable flask of 500 mL was charged with 6.2 g (0.026 mol) of 9-acetyl-9H-fluorene, 5.0 g (0.026 mol) of 1-phenylhydrazine hydrochloride, and 112.1 g of tert-amyl alcohol as a solvent, and the reaction was carried out at 90°C for 4 hours while stirring under nitrogen gas flow (10 mL/min). After completion of the reaction, the reaction liquid was cooled to room temperature and quenched with 100 g of water and extracted with 100 g of ethyl acetate. The obtained organic phase was dehydrated over magnesium sulphate and concentrated by an evaporator, and then the obtained solid was purified by silica gel column chromatography (developing solvent: chloroform) to obtain 5.1 g of an indolenine compound 1.

Next, a 100 mL four-neck flask was charged with 2.0 g (0.007 mol) of the indolenine compound 1 obtained above, 11.2 g (0.079mol) of iodomethane, and 53.3 g of N, N-dimethylformamide, and the mixture was stirred at 80°C for 6 hours under nitrogen gas flow (5 mL/min). The reaction liquid was cooled to room temperature, and then precipitated in 300 g of toluene followed by filtration of the precipitated solid to obtain 1.8 g of an indolenium salt 1.

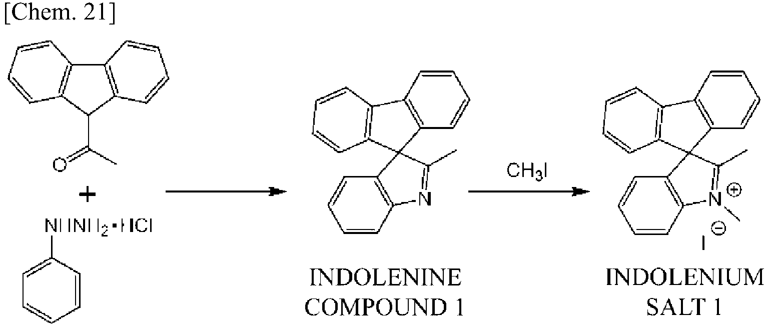

N-((1E)-2-phenyl-3-((E)-(phenylimino)methyl)cyclohex-2-en-1-ylidene)methylaniline hydrochloride (dianiline salt 1) was synthesized according to the method described in Bioconjugate Chemistry, 29 (11), pp. from 3886 to 3895 (2018). To a 100 mL four-neck flask were added 1.0 g (0.0021 mol) of the indolenium salt 1 obtained above, 0.42 g (0.0011mol) of the dianiline salt 1, 0.28g (0.003 mol) of sodium acetate, 9.9 g of acetic acid, and 10.1 g of acetic acid anhydride, and the mixture was stirred at 100°C for 8 hours. The reaction liquid was cooled to room temperature, 150 g of water was added thereto, and the precipitated solid was collected by filtration. The solid was purified by silica gel column chromatography (developing solvent: chloroform) to obtain 0.21g of an iodide of the cyanine compound 1.

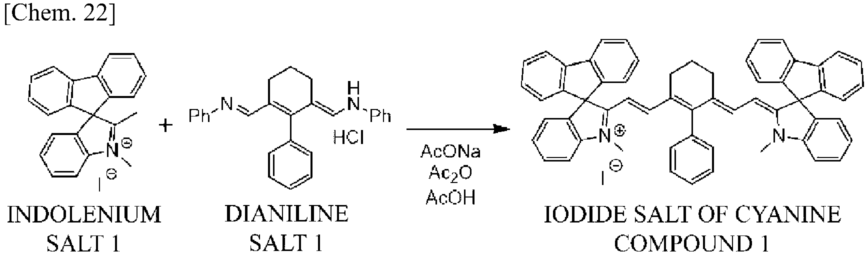

0.50 g (0.50 mmol) of the iodide of the cyanine compound 1 was dissolved in 20 mL of acetone, and 6.7 g (0.10 mmol) of a 10.5% aqueous solution of sodium tetrakis(pentafluorophenyl)borate (available from NIPPON SHOKUBAI CO., LTD.) was added, and the resulting mixture was stirred over night at room temperature. The reaction liquid was concentrated by an evaporator and then purified by silica gel column chromatography (developing solvent: chloroform) to obtain 0.57 g of a cyanine compound 1 presented in Table 1. It is to be noted that the pKa of the tetrakis(pentafluorophenyl)borate anion of the cyanine compound 1 is -8.0 or less.

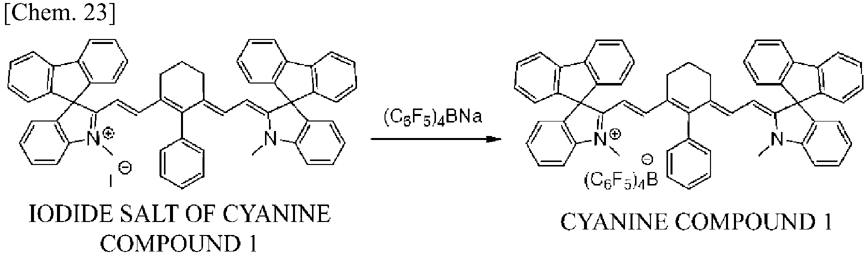

### (1-2) Synthesis Example 2: Synthesis of Cyanine Compound 2

Using 3-butyl-2-(2-[3-[2-(3-butyl-1,1-dimethyl-1,3-dihydrobenzo[e]indol-2-ylidene)ethylidene]-2-chloro-cyclohex-1-enyl]vinyl)-1,1-dimethyl-1H-benzo[e]indolium hexafluorophosphate (S0712, available from Few Chemicals GmbH) as a raw material cyanine compound, 1.00 g (1.2 mmol) of the raw material cyanine compound was dissolved in acetone 100 g, and 9.00 g (1.4 mmol) of the 10.5% aqueous solution of sodium tetrakis(pentafluorophenyl)borate heated to 40°C was added thereto, followed by stirring at room temperature for 2 hours. Next the solvent was removed, the solid obtained was washed with ion-exchanged water to obtain 1.47g of the cyanine compound 2 presented in Table 1.

### (1-3) Synthesis Example 3: Synthesis of Cyanine Compound 3

1.23 g of the cyanine compound 3 presented in Table 1 was obtained in the same manner as in Synthesis Example 2, except that 6-butoxy-2-[5-(6-butoxy-1-butyl-1H-benzo[cd]indol-2-ylidene)-penta-1, 3-dienyl]-1-butyl-benzo[cd]indolium tetrafluoroborate (S2437, available from Few Chemicals GmbH) was used as a raw material cyanine compound, in Synthesis Example 2.

### (1-4) Synthesis Example 4: Synthesis of Cyanine Compound 4

1.79 g of the cyanine compound 4 presented in Table 1 was obtained in the same manner as in Synthesis Example 2, except that 1-butyl-2-(2-[3-(2-[1-butyl-1H-benzo[cd]indol-2-ylidene]ethylidene)-2-chloro-1-cyclohex-1-enyl]-vinyl)-benzo[cd]indolium tetrafluoroborate (IR1014, available from Exciton, Inc.) was used as a raw material cyanine compound in Synthesis Example 2.

### (1-5) Synthesis Example 5: Synthesis of Cyanine Compound 5

2.12 g of the cyanine compound 5 presented in Table 1 was obtained in the same manner as in Synthesis Example 2, except that 1-butyl-2-(2-[3-(2-[1-butyl-1H-benzo[cd]indol-2-ylidene]ethylidene)-2-phenyl-1-cyclopent-1-enyl]-vinyl)-benzo[cd]indolium tetrafluoroborate (S0813, available from Few Chemicals GmbH) was used as a raw material cyanine compound in Synthesis Example 2.

### (1-6) Synthesis Example 6: Synthesis of Cyanine Compound 6

1.12 g of the cyanine compound 6 presented in Table 1 was obtained in the same manner as in Synthesis Example 2, except that 1-butyl-2[7-(1-butyl-1H-benzo[cd]indol-2-ylidene)-hepta-1,3,5-trienyl]-benzo[cd]indolium hexafluorophosphate (S2058, available from Few Chemicals GmbH) was used as a raw material cyanine compound in Synthesis Example 2.

**[Table 1]**

| | |
|---|---|
| CYANINE COMPOUND 1 | CYANINE COMPOUND 2 |
| 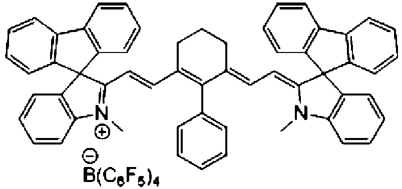 | 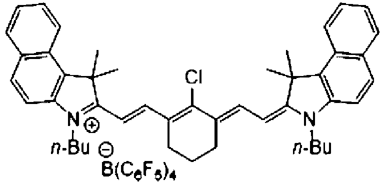 |
| CYANINE COMPOUND 3 | CYANINE COMPOUND 4 |
| 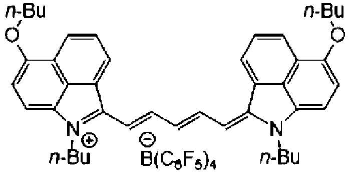 | 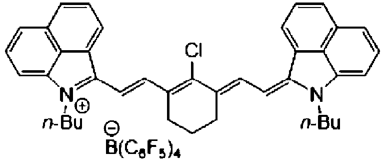 |
| CYANINE COMPOUND 5 | CYANINE COMPOUND 6 |
| 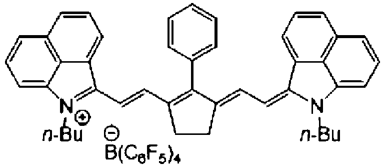 | 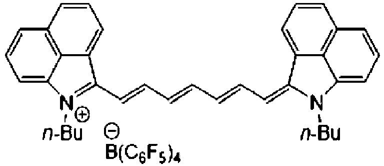 |

### (1-7) Synthesis Example 7: Synthesis of Phthalocyanine Compound 1

The phthalocyanine compound 1 presented in Table 2 was synthesized according to the method described in Example 16 of JP 4278923 B.

### (1-8) Synthesis Example 8: Synthesis of Phthalocyanine Compound 2

The phthalocyanine compound 2 presented in Table 2 was synthesized according to the method described in Example 2 of JP 3260317 B.

**[Table 2]**

| |
|---|
| PHTHALOCYANINE COMPOUND 1 |
| 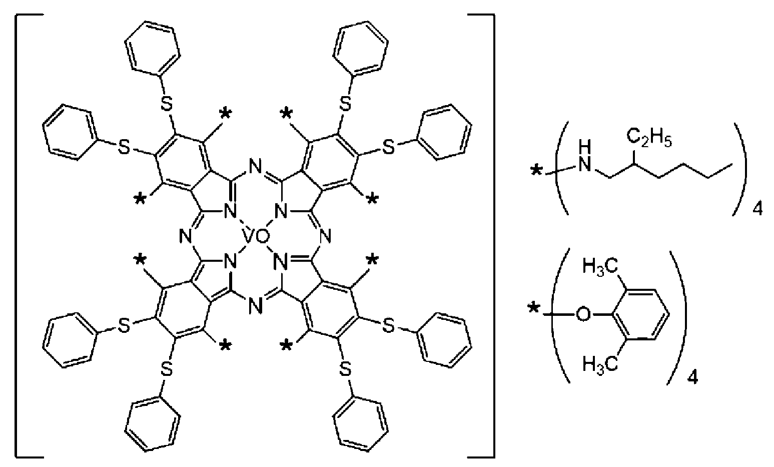 |
| PHTHALOCYANINE COMPOUND 2 |
| 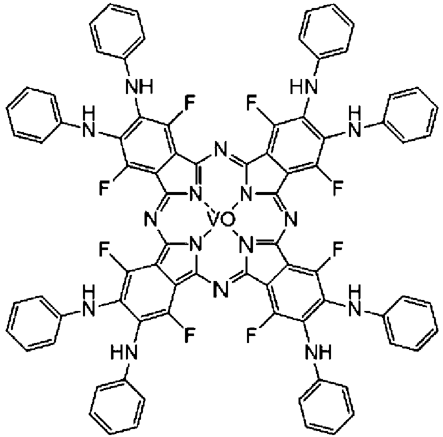 |

### (1-9) Synthesis Example 9: Synthesis of Acrylic Resin A

A reaction vessel equipped with a stirrer, a temperature sensor, a cooling tube, and a nitrogen inlet tube was charged with 83.5 parts by mass of methyl methacrylate, 12 parts by mass of 2-hydroxymethyl(meth)acrylate, 88.7 parts by mass of toluene, and 0.05 parts by mass of an antioxidant (ADK STAB (trade name) 2112 available from ADEKA CORPORATION), and the temperature was raised to 105°C while passing nitrogen through the reaction vessel. When reflux was started accompanying temperature rise, 0.435 parts by mass of a 20 wt.% toluene solution of t-amyl peroxyisononanoate (Luperox (trade name) 570T20, available from ARKEMA Yoshitomi, Ltd.) was added as a polymerization initiator. Subsequently, 4.5 parts by mass of styrene and 0.15 parts by mass of n-dodecyl mercaptan were added dropwise over 2 hours, and 0.865 parts by mass of a 20 wt.% toluene solution of t-amyl peroxyisononanoate was further added dropwise over 4 hours. While these were added dropwise, the mixed solution was refluxed at an approximate temperature from 105°C to 110°C to allow the solution polymerization to proceed. After completion of the dropwise addition, the mixture was aged at the same temperature for 2 hours.

To the obtained polymer solution was added 0.075 parts by mass of stearyl phosphate (Phoslex A-18 available from SC Organic Chemical Co., Ltd.), and a cyclocondensation reaction for forming a lactone ring structure was allowed to proceed under reflux at an approximate temperature from 90 to 110°C for 2 hours. Further, the polymer solution was passed through a multitubular heat exchanger heated to 240°C to complete the cyclocondensation reaction. Thereafter, the polymer solution was introduced into a vent type screw twin-screw extruder (L/D = 52) at a processing rate of 100 parts by mass/hour (in terms of resin amount). The vent type twin-screw extruder had a barrel temperature of 250°C, and was equipped with one rear vent, four fore vents (referred to as first, second, third, and fourth vents from the upstream side), and a side feeder located between the third vent and the fourth vent, and a leaf disk-type polymer filter (filtration accuracy: 10 µm) was disposed at the tip. The devolatilization was performed by setting the degree of vacuum of the rear vent to 798 hPa, the degree of vacuum of the first vent to 266 hPa, and the degrees of vacuum from the second vent to the fourth vent to 27 hPa. At that time, ion-exchanged water was fed from the rear of the second vent, the third vent, and the fourth vent at a feeding rate of 1.5 parts by mass/hour.

After completion of the devolatilization, the resin composition in a molten state remaining in the extruder was discharged from the tip of the extruder while being filtered through a polymer filter. Thereafter, the resin composition was passed through a die provided at the tip of the extruder and introduced into a water tank filled with cooling water to be cooled, thereby obtaining a strand of the resin composition. The cooling water was filtered through a filter having a pore size of 1 µm (Micropore Filter 1EU, available from ORGANO CORPORATION) and kept at a temperature within the range of 30 ± 10°C. The cooled strand was introduced into a cutting machine (pelletizer) to obtain pellets of the acrylic resin A having a lactone ring structure in the main chain.

### (2) Spectroscopic Measurement of Cyanine Compound and Phthalocyanine Compound

Chloroform solutions of the cyanine compounds 1 to 6 and the phthalocyanine compounds 1 and 2 were prepared, and the transmission spectra at wavelengths from 300 nm to 1300 nm were measured. Concentrations of the chloroform solutions of the cyanine compound and the phthalocyanine compound were adjusted so that each transmittance at the absorption maximum wavelength was 10% (± 0.05%), each light transmittance was measured at a pitch of 1.0 nm measured using a spectrophotometer (UV-3600, available from Shimadzu Corporation), and each wavelength at which the absorption was maximum in the range of wavelengths from 300 nm to 1300 nm (absorption maximum wavelength λ max), each peak width (half-value widths) at a transmittance of 50% of the peak giving the absorption maximum wavelength, and each average visible light transmittance in the range of wavelengths from 380 nm to 780 nm were determined, respectively. The results are presented in Table 3. The average transmittances of the cyanine compounds from 1 to 6 in the range of wavelengths from 380 nm to 780 nm when the transmittances at the absorption maximum wavelengths were 10% were 81% or more.

**[Table 3]**

| | λ max | Average visible light transmittance | Half-value width |
|---|---|---|---|
| Cyanine compound 1 | 798 nm | 90.9% | 51 nm |
| Cyanine compound 2 | 833 nm | 92.0% | 64 nm |
| Cyanine compound 3 | 944 nm | 95.1% | 85 nm |
| Cyanine compound 4 | 1033 nm | 96.0% | 86 nm |
| Cyanine compound 5 | 1044 nm | 97.4% | 87 nm |
| Cyanine compound 6 | 997 nm | 95.9% | 89 nm |
| Phthalocyanine compound 1 | 974 nm | 80.2% | 111 nm |
| Phthalocyanine compound 2 | 888 nm | 41.9% | 415 nm |

### (3) Preparation of Material for Laser Welding

### (3-1) Preparation Example 1: Preparation of Material for Laser Welding 1

To 4.94 parts by mass of polymethyl methacrylate (hereinafter referred to as "PMMA") was added 47.5 parts by mass of chloroform, and the mixture was stirred at room temperature for 1 hour to obtain a resin solution 1. To 0.06 parts by mass of the cyanine compound 4 was added 47.5 parts by mass of chloroform, and the mixture was stirred at room temperature for 1 hour to obtain a pigment solution 1. The resin solution 1 and pigment solution 1 were mixed and stirred at room temperature for 2 hours, and the mixture was then filtered through a filter having a pore size of 0.45 µm (non-aqueous-based 13N, available from GL Sciences Inc.) to remove a foreign matter, thereby obtaining the material for laser welding 1 having a concentration of a solute of 5.0%.

### (3-2) Preparation Example 2: Preparation of Material for Laser Welding 2

To 9.52 parts by mass of PMMA was added 45.0 parts by mass of chloroform, and the mixture was stirred at room temperature for 1 hour to obtain a resin solution 2. To 0.48 parts by mass of the cyanine compound 5 was added 45.0 parts by mass of chloroform, and the mixture was stirred at room temperature for 1 hour to obtain a pigment solution 2. The resin solution 2 and pigment solution 2 were mixed and stirred at room temperature for 2 hours, and the mixture was then filtered through a filter having a pore size of 0.45 µm (non-aqueous-based 25N available from GL Sciences Inc.) to remove a foreign matter, thereby obtaining the material for laser welding 2 having a concentration of a solute of 10.0%.

### (3-3) Preparation Example 3: Preparation of Material for Laser Welding 3

To 4.94 parts by mass of PMMA was added 47.5 parts by mass of chloroform, and the mixture was stirred at room temperature for 1 hour to obtain resin solution 3. To 0.06 parts by mass of the cyanine compound 5 was added 47.5 parts by mass of chloroform, and the mixture was stirred at room temperature for 1 hour to obtain a pigment solution 3. The resin solution 3 and pigment solution 3 were mixed and stirred at room temperature for 2 hours, and the mixture was then filtered through a filter having a pore size of 0.45 µm (non-aqueous-based 13N available from GL Sciences Inc.) to remove a foreign matter, thereby obtaining the material for laser welding 3 having a concentration of a solute of 5.0%.

### (3-4) Preparation Example 4: Preparation of Material for Laser Welding 4

To 2.50 parts by mass of PMMA was added 48.8 parts by mass of chloroform, and the mixture was stirred at room temperature for 1 hour to obtain a resin solution 4. To 0.003 parts by mass of the cyanine compound 5 was added 48.8 parts by mass of chloroform, and the mixture was stirred at room temperature for 1 hour to obtain a pigment solution 4. The resin solution 4 and pigment solution 4 were mixed and stirred at room temperature for 2 hours, and the mixture was then filtered through a filter having a pore size of 0.45 µm (non-aqueous-based 13N, available from GL Sciences Inc.) to remove a foreign matter, thereby obtaining the material for laser welding 4 having a concentration of a solute of 2.5%.

### (3-5) Preparation Example 5: Preparation of Material for Laser Welding 5

To 9.52 parts by mass of the acrylic resin A was added 45.0 parts by mass of chloroform, and the mixture was stirred at room temperature for 1 hour to obtain a resin solution 5. To 0.48 parts by mass of the cyanine compound 5 was added 45.0 parts by mass of chloroform, and the mixture was stirred at room temperature for 1 hour to obtain a pigment solution 5. The resin solution 5 and pigment solution 5 were mixed and stirred at room temperature for 2 hours, and the mixture was then filtered through a filter having a pore size of 0.45 µm (non-aqueous-based 25N, available from GL Sciences Inc.) to remove a foreign matter, thereby obtaining the material for laser welding 5 having a concentration of a solute of 10.0%.

### (3-6) Preparation Example 6: Preparation of Material for Laser Welding 6

To 4.94 parts by mass of the acrylic resin A was added 47.5 parts by mass of chloroform, and the mixture was stirred at room temperature for 1 hour to obtain a resin solution 6. To 0.06 parts by mass of the cyanine compound 5 was added 47.5 parts by mass of chloroform, and the mixture was stirred at room temperature for 1 hour to obtain a pigment solution 6. The resin solution 6 and pigment solution 6 were mixed and stirred at room temperature for 2 hours, and the mixture was then filtered through a filter having a pore size of 0.45 µm (non-aqueous-based 13N, available from GL Sciences Inc.) to remove a foreign matter, thereby obtaining the material for laser welding 6 having a concentration of a solute of 5.0%.

### (3-7) Preparation Example 7: Preparation of Material for Laser Welding 7

To 2.50 parts by mass of the acrylic resin A was added 48.8 parts by mass of chloroform, and the mixture was stirred at room temperature for 1 hour to obtain a resin solution 7. To 0.003 parts by mass of the cyanine compound 5 was added 48.8 parts by mass of chloroform, and the mixture was stirred at room temperature for 1 hour to obtain a pigment solution 7. The resin solution 7 and pigment solution 7 were mixed and stirred at room temperature for 2 hours, and the mixture was then filtered through a filter having a pore size of 0.45 µm (non-aqueous-based 13N, available from GL Sciences Inc.) to remove a foreign matter, thereby obtaining the material for laser welding 7 having a concentration of a solute of 2.5%.

### (3-8) Preparation Example 8: Preparation of Material for Laser Welding 8

To 4.94 parts by mass of a cycloolefin polymer (hereinafter referred to as "COP") was added 47.5 parts by mass of chloroform, and the mixture was stirred at room temperature for 1 hour to obtain a resin solution 8. To 0.06 parts by mass of the cyanine compound 5 was added 47.5 parts by mass of chloroform, and the mixture was stirred at room temperature for 1 hour to obtain a pigment solution 8. The resin solution 8 and pigment solution 8 were mixed and stirred at room temperature for 2 hours, and the mixture was then filtered through a filter having a pore size of 0.45 µm (non-aqueous-based 13N, available from GL Sciences Inc.) to remove a foreign matter, thereby obtaining the material for laser welding 8 having a concentration of a solute of 5.0%.

### (3-9) Preparation Example 9: Preparation of Material for Laser Welding 9

To 1.25 parts by mass of polycarbonate (hereinafter referred to as "PC") was added 49.4 parts by mass of cyclohexanone, and the mixture was heated to 75°C and stirred for 1 hour to obtain a resin solution 9. To 0.002 parts by mass of the cyanine compound 5 was added 49.4 parts by mass of cyclohexanone, and the mixture was stirred at room temperature for 1 hour to obtain a pigment solution 9. The resin solution 9 and pigment solution 9 were mixed and stirred at room temperature for 2 hours, and the mixture was filtered through a filter having a pore size of 0.45 µm (non-aqueous-based 13N, available from GL Sciences Inc.) to remove a foreign matter, thereby obtaining the material for laser welding 9 having a concentration of a solute of 1.25%.

### (3-10) Preparation Example 10: Preparation of Material for Laser Welding 10

To 9.30 parts by mass of PMMA was added 45.0 parts by mass of chloroform, and the mixture was stirred at room temperature for 1 hour to obtain a resin solution 10. To 0.48 parts by mass of phthalocyanine compound 1 was added 45.0 parts by mass of chloroform, and the mixture was stirred at room temperature for 1 hour to obtain a pigment solution 10. The resin solution 10 and pigment solution 10 were mixed and stirred at room temperature for 2 hours, and the mixture was then filtered through a filter having a pore size of 0.45 µm (non-aqueous-based 25N, available from GL Sciences Inc.) to remove a foreign matter, thereby obtaining the material for laser welding 10 having a concentration of a solute of 10.0%.

### (3-11) Preparation Example 11: Preparation of Material for Laser Welding 11

To 4.94 parts by mass of PMMA was added 47.5 parts by mass of chloroform, and the mixture was stirred at room temperature for 1 hour to obtain a resin solution 11. To 0.06 parts by mass of the phthalocyanine compound 2 was added 47.5 parts by mass of chloroform, and the mixture was stirred at room temperature for 1 hour to obtain a pigment solution 11. The resin solution 11 and pigment solution 11 were mixed and stirred at room temperature for 2 hours, and the mixture was then filtered through a filter having a pore size of 0.45 µm (non-aqueous-based 13N, available from GL Sciences Inc.) to remove a foreign matter, thereby obtaining the material for laser welding 11 having a concentration of a solute of 5.0%.

### (3-12) Preparation Example 12: Preparation of Material for Laser Welding 12

PMMA pellets were mixed with 0.05 parts by mass of the cyanine compound 5, and a Labo Plastomill 4C150 available from Toyo Seiki Seisaku-sho, Ltd., was used to melt-knead the mixture for 5 minutes at a screw rotation speed of 150 rpm and a preset temperature of 220°C, thereby obtaining the pelletized material for laser welding 12 composed of PMMA and the cyanine compound 5.

### (3-13) Preparation Example 13: Preparation of Material for Laser Welding 13

The pellets of the acrylic resin A obtained in Synthesis Example 9 were mixed with 0.01 parts by mass of the cyanine compound 5, and a Labo Plastomill 4C150 available from Toyo Seiki Seisaku-sho, Ltd., was used to melt-knead the mixture for 3 minutes at a screw rotation speed of 150 rpm and a preset temperature of 230°C, thereby obtaining the pelletized material for laser welding 13 composed of the acrylic resin A and the cyanine compound 5.

### (3-14) Preparation Example 14: Preparation of Material for Laser Welding 14

The pellets of the acrylic resin A obtained in Synthesis Example 9 were mixed with 0.10 parts by mass of the cyanine compound 5, and a Labo Plastomill 4C150 available from Toyo Seiki Seisaku-sho, Ltd., was used to melt-knead the mixture for 3 minutes at a screw rotation speed of 150 rpm and a preset temperature of 240°C, thereby obtaining the pelletized material for laser welding 14 including the acrylic resin A and the cyanine compound 5.

### (3-15) Preparation Example 15: Preparation of Material for Laser Welding 15

The pelletized material for laser welding 15 was obtained in the same manner as in Preparation Example 12 except that PMMA was changed to PC in Preparation Example 12.

### (3-16) Preparation Example 16: Preparation of Material for Laser Welding 16

The pelletized material for laser welding 16 was obtained in the same manner as in Preparation Example 12 except that PMMA was changed to polystyrene (hereinafter referred to as "PSt") in Preparation Example 12.

### (3-17) Preparation Example 17: Preparation of Material for Laser Welding 17

The pelletized material for laser welding 17 was obtained in the same manner as in Preparation Example 12 except that PMMA was changed to an acrylonitrile-styrene copolymer (hereinafter referred to as "AS") in Preparation Example 12.

### (4) Fabrication of Resin Base Material for Laser Welding Test

### (4-1) Production Example 1: Fabrication of Resin Base Material A1

A polymethyl methacrylate plate (available from Mitsubishi Chemical Corporation, size 70 mm × 150 mm × 2 mmt, hereinafter referred to as "PMMA plate") was cut into a size of 37.5 mm × 17 mm with an ultrasonic cutter (SUW-30CT, available from SUZUKI MOTOR CORPORATION) to obtain the resin base material A1.

### (4-2) Production Example 2: Fabrication of Resin Base Material A2

The pellets of the acrylic resin A obtained in Synthesis Example 9 were dried at 100°C for 12 hours or longer, and then molded with an injection-molding machine (NS40-5A available from NISSEI PLASTIC INDUSTRIAL CO., LTD.) at a molding temperature of 215°C and a mold temperature of 70°C with a mold having a size of 100 mm × 100 mm × 2 mmt to fabricate an acrylic plate. The resultant was cut into a size of 37.5 mm × 17 mm with an ultrasonic cutter (SUW-30CT available from SUZUKI MOTOR CORPORATION) to obtain the resin base material A2.

### (4-3) Production Example 3: Fabrication of Resin Base Material A3

A cycloolefin polymer plate (available from Zeon Corporation, size 70 mm × 150 mm × 3 mmt, hereinafter referred to as "COP plate") was cut into a size of 37.5 mm × 17 mm with an ultrasonic cutter (SUW-30CT available from SUZUKI MOTOR CORPORATION) to obtain a resin base material A3.

### (4-4) Production Example 4: Fabrication of Resin Base Material A4

A polycarbonate plate (size 70 mm × 150 mm × 2 mmt, hereinafter referred to as "PC plate") was cut into a size of 37.5 mm × 17 mm with an ultrasonic cutter (SUW-30CT available from SUZUKI MOTOR CORPORATION) to obtain the resin base material A4.

### (4-5) Production Example 5: Fabrication of Resin Base Material B1

The PMMA plate used in Production Example 1 was cut into a size of 70 mm × 50 mm, and 1 cc of the material for laser welding 1 was dropped thereon, and a film was formed using a spin coater (1H-D7 available from MIKASA Co.,Ltd.), thereby forming a coating film of the material for laser welding 1 on the PMMA plate. The rotation speed of the spin coater was adjusted in the range from 700 rpm to 1600 rpm so that the light absorbing layer formed of the coating film had a predetermined transmittance, and the holding time was set to one second. The PMMA plate on which the coating film of the material for laser welding 1 was formed was placed in a precision thermostat (DN610I available from Yamato Scientific Co., Ltd.) and heated at 90°C for 30 minutes to dry the coating film of the material for laser welding 1 and form a light absorbing layer, thereby fabricating a laminate in which the light absorbing layer was formed on the PMMA plate. The laminate was cut into a size of 37.5 mm × 17 mm with an ultrasonic cutter to obtain the resin base material B1.

### (4-6) Production Examples 6 to 10: Fabrication of Resin Base Materials B2 to B6

The resin base materials B2 to B6 were fabricated in the same manner as in Production Example 5, except that the materials for laser welding 2 to 6 were used instead of the material for laser welding 1 in Production Example 5.

### (4-7) Production Example 11: Fabrication of Resin Base Material B7

The resin base material B7 was fabricated in the same manner as in Production Example 5, except that the acrylic plate used in Production Example 2 was used instead of the PMMA plate, and the material for laser welding 5 was used instead of the material for laser welding 1 in Production Example 5.

### (4-8) Production Examples 12 and 13: Fabrication of Resin Base Materials B8 and B9

The resin base materials B8 and B9 were fabricated in the same manner as in Production Example 11, except that the materials for laser welding 6 and 7 were used instead of the material for laser welding 5 in Production Example 11.

### (4-9) Production Example 14: Fabrication of Resin Base Material B10

The resin base material B10 was fabricated in the same manner as in Production Example 5, except that the COP plate used in Production Example 3 was used instead of the PMMA plate, and the material for laser welding 8 was used instead of the material for laser welding 1 in Production Example 5.

### (4-10) Production Example 15: Fabrication of Resin Base Material B11

The resin base material B11 was fabricated in the same manner as in Production Example 5, except that the PC plate used in Production Example 4 was used instead of the PMMA plate, and the material for laser welding 9 was used instead of the material for laser welding 1 in Production Example 5.

### (4-11) Production Examples 16 and 17: Fabrication of Resin Base Materials B12 and B13

The resin base materials B12 and B13 were fabricated in the same manner as in Production Example 5, except that the materials for laser welding 10 and 11 were used instead of the material for laser welding 1 in Production Example 5.

### (4-12) Production Example 18: Fabrication of Resin Base Material C1

The PMMA pellets were dried at 80°C for 5 hours, and then pressed under pressure for 2 minutes under the conditions of a temperature of 230°C and a pressure of 20 MPa using a hot press machine available from Imoto machinery CO., LTD., thereby fabricating a PMMA sheet having a thickness of 100 µm. The resultant was cut into a size of 15 mm × 17 mm to obtain the resin base material C1. The thickness of the sheet was calculated by measuring thicknesses at any five points with a micrometer and calculating an average value thereof.

### (4-13) Production Example 19: Fabrication of Resin Base Material C2

The pellets of the acrylic resin A obtained in Synthesis Example 9 were dried at 80°C for 5 hours, and then pressed under pressure for 2 minutes under the conditions of a temperature of 230°C and a pressure of 20 MPa using a hot press machine available from Imoto machinery CO., LTD., thereby fabricating an acrylic resin A sheet having a thickness of 300 µm. The resultant was cut into a size of 37.5 mm × 17 mm to obtain the resin base material C2.

### (4-14) Production Example 20: Fabrication of Resin Base Material C3

The pellets of the acrylic resin A obtained in Synthesis Example 9 were dried at 80°C for 5 hours and then pressed under pressure for 2 minutes under the conditions of a temperature of 250°C and a pressure of 20 MPa using a hot press machine available from Imoto machinery CO., LTD., thereby fabricating an acrylic resin A sheet having a thickness of 80 µm. The obtained unstretched sheet was cut into a size of 96 mm × 96 mm, and sequentially biaxially stretched at a temperature of 140°C and a stretching rate of 240 mm/min using a sequential biaxial stretching machine X-6S available from Toyo Seiki Seisaku-sho, Ltd. so that the stretching ratio was twice in each of the machine direction (MD direction) and the transverse direction (TD direction). The obtained stretched sheet was heat-treated for 1 minute and cooled to obtain a sheet having a thickness of 20 µm. The resultant was cut into a size of 15 mm × 17 mm to obtain the resin base material C3.

### (4-15) Production Example 21: Fabrication of Resin Base Material C4

A PC sheet was fabricated in the same manner as in Production Example 18, except that the PMMA pellets were changed to PC pellets, and the PC sheet was cut into a size of 15 mm × 17 mm to obtain a resin base material C4 in Production Example 18.

### (4-16) Production Example 22: Fabrication of Resin Base Material C5

A PSt sheet was fabricated in the same manner as in Production Example 18, except that the PMMA pellets were changed to PSt pellets, and the PSt sheet was cut into a size of 15 mm × 17 mm to obtain the resin base material C5 in Production Example 18.

### (4-17) Production Example 23: Fabrication of Resin Base Material C6

An AS sheet was fabricated in the same manner as in Production Example 18, except that the PMMA pellets were changed to AS pellets, and the AS sheet was cut into a size of 15 mm × 17 mm to obtain the resin base material C6 in Production Example 18.

### (4-18) Production Example 24: Fabrication Resin Base Material D1

The pelletized material for laser welding 12 was dried at 80°C for 5 hours, and then pressed under pressure for 2 minutes under the conditions of a temperature of 230°C and a pressure of 20 MPa using a hot press machine available from Imoto machinery CO., LTD., thereby fabricating an absorbing material sheet having a thickness of 100 µm. The resultant was cut into a size of 15 mm × 17 mm to obtain the resin base material D1.

### (4-19) Production Example 25: Fabrication Resin Base Material D2

The pelletized material for laser welding 13 was dried at 80°C for 5 hours, and then pressed under pressure for 2 minutes under the conditions of a temperature of 230°C and a pressure of 20 MPa using a hot press machine available from Imoto machinery CO., LTD., thereby fabricating an absorbing material sheet having a thickness of 300 µm. The resultant was cut into a size of 15 mm × 17 mm to obtain the resin base material D2.

### (4-20) Production Example 26: Fabrication of Resin Base Material D3

The pelletized material for laser welding 14 was dried at 80°C for 5 hours, and then pressed under pressure for 2 minutes under conditions of a temperature of 250°C and a pressure of 20 MPa using a hot press machine available from Imoto machinery CO., LTD., to fabricate a sheet having a thickness of 80 µm. The obtained unstretched sheet was cut into a size of 96 mm × 96 mm, and sequentially biaxially stretched at a temperature of 140°C and a stretching rate of 240 mm/min using a sequential biaxial stretching machine X-6S available from Toyo Seiki Seisaku-sho, Ltd. so that the stretching ratio was twice in each of the machine direction (MD direction) and the transverse direction (TD direction). The obtained stretched sheet was heat-treated for 1 minute and cooled to fabricate an absorbing material sheet having a thickness of 20 µm. The resultant was cut into a size of 15 mm × 17 mm to obtain the resin base material D3.

### (4-21) Production Example 27: Fabrication of Resin Base Material D4

The resin base material D4 was fabricated in the same manner as in Production Example 24, except that the material for laser welding 15 was used instead of the material for laser welding 12 in Production Example 24. The thickness of the resin base material D4 was 100 µm.

### (4-22) Production Example 28: Fabrication of Resin Base Material D5

The resin base material D5 was fabricated in the same manner as in Production Example 24, except that the material for laser welding 16 was used instead of the material for laser welding 12 in Production Example 24. The thickness of the resin base material D5 was 80 µm.

### (4-23) Production Example 29: Fabrication of Resin Base Material D6

The resin base material D6 was fabricated in the same manner as in Production Example 24, except that the material for laser welding 17 was used instead of the material for laser welding 12 in Production Example 24. The thickness of the resin base material D6 was 120 µm.

### (5) Evaluation of Resin Base material

### (5-1) Spectroscopic Measurement of Resin Base Material

Transmission spectra of the resin base materials A1 to A4, the resin base materials B1 to B13, the resin base materials C1 to C6, and the resin base materials D1 to D6, fabricated in Production Examples 1 to 29 at a wavelength from 300 nm to 1300 nm, were measured using a spectrophotometer (UV-3600, available from Shimadzu Corporation). The light transmittances were measured at a pitch of 1.0 nm measured, and the transmittances at a wavelength of 1070 nm and the average visible light transmittances in the range of wavelengths from 380 nm to 780 nm were determined, respectively. The results are presented in Table 4 and Table 5.

**[Table 4]**

| | Resin plate | Material for laser welding (light absorbing layer) | | | | 1070 nm transmittance | Average visible light transmittance |
|---|---|---|---|---|---|---|---|
| | | No. | Resin | Pigment | Solute concentration | | |
| Resin base material A1 | PMMA plate | - | - | - | - | 92.3% | 91.0% |
| Resin base material A2 | Acrylic plate | - | - | - | - | 91.8% | 90.3% |
| Resin base material A3 | COP plate | - | - | - | - | 90.6% | 89.8% |
| Resin base material A4 | PC plate | - | - | - | - | 90.9% | 86.6% |
| Resin base material B1 | PMMA plate | 1 | PMMA | Cyanine compound 4 | 5.0% | 71.9% | 89.3% |
| Resin base material B2 | PMMA plate | 2 | PMMA | Cyanine compound 5 | 10.0% | 10.6% | 84.9% |
| Resin base material B3 | PMMA plate | 3 | PMMA | Cyanine compound 5 | 5.0% | 75.2% | 90.6% |
| Resin base material B4 | PMMA plate | 4 | PMMA | Cyanine compound 5 | 2.5% | 96.8% | 90.4% |
| Resin base material B5 | PMMA plate | 5 | Acrylic resin A | Cyanine compound 5 | 10.0% | 5.2% | 80.4% |
| Resin base material B6 | PMMA plate | 6 | Acrylic resin A | Cyanine compound 5 | 5.0% | 69.8% | 89.7% |
| Resin base material B7 | Acrylic plate | 5 | Acrylic resin A | Cyanine compound 5 | 10.0% | 11.2% | 84.3% |
| Resin base material B8 | Acrylic plate | 6 | Acrylic resin A | Cyanine compound 5 | 5.0% | 68.3% | 89.5% |
| Resin base material B9 | Acrylic plate | 7 | Acrylic resin A | Cyanine compound 5 | 2.5% | 98.1% | 90.8% |
| Resin base material B10 | COP plate | 8 | COP | Cyanine compound 5 | 5.0% | 74.8% | 88.4% |
| Resin base material B11 | PC plate | 9 | PC | Cyanine compound 5 | 1.25% | 91.1% | 86.6% |
| Resin base material B12 | PMMA plate | 10 | PMMA | Phthalocyanine compound 1 | 10.0% | 76.4% | 27.5% |
| Resin base material B13 | PMMA plate | 11 | PMMA | Phthalocyanine compound 2 | 5.0% | 73.1% | 45.4% |

**[Table 5]**

| | Resin sheet or material for laser welding (absorbing material sheet) | | | | Sheet thickness (µm) | 1070 nm transmittance | Average visible light transmittance |
|---|---|---|---|---|---|---|---|
| | No. | Resin | Pigment | Solute concentration | | | |
| Resin base material C1 | - | PMMA | - | - | 100 | 91.8% | 89.7% |
| Resin base material C2 | - | Acrylic resin A | - | - | 300 | 91.3% | 90.7% |
| Resin base material C3 | - | Acrylic resin A | - | - | 20 | 91.2% | 91.8% |
| Resin base material C4 | - | PC | - | - | 100 | 88.6% | 86.3% |
| Resin base material C5 | - | PSt | - | - | 80 | 89.7% | 86.9% |
| Resin base material C6 | - | AS | - | - | 120 | 90.0% | 87.3% |
| Resin base material D 1 | 12 | PMMA | Cyanine compound 5 | 0.05% | 100 | 55.4% | 76.9% |
| Resin base material D2 | 13 | Acrylic resin A | Cyanine compound 5 | 0.01% | 300 | 80.8% | 89.7% |
| Resin base material D3 | 14 | Acrylic resin A | Cyanine compound 5 | 0.10% | 20 | 78.5% | 89.1% |
| Resin base material D4 | 15 | PC | Cyanine compound 5 | 0.05% | 100 | 23.7% | 81.7% |
| Resin base material D5 | 16 | PSt | Cyanine compound 5 | 0.05% | 80 | 46.4% | 82.6% |
| Resin base material D6 | 17 | AS | Cyanine compound 5 | 0.05% | 120 | 75.1% | 81.4% |

### (5-2) Transmission Spectra of Light Absorbing Layers of Resin Base Materials B1 to B6

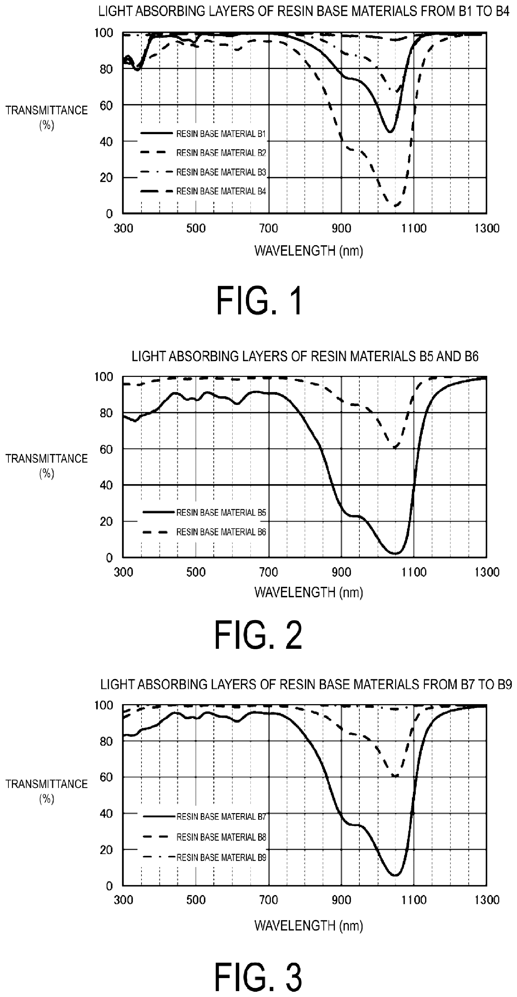

The transmission spectra of the light absorbing layers of the resin base materials B1 to B6 were obtained by taking difference spectra between the transmission spectra of the resin base materials B1 to B6 and the transmission spectrum of the resin base material A1. Similarly, the transmission spectra of the light absorbing layers of the resin base materials B7 to B9 were obtained by taking difference spectra between the transmission spectra of the resin base materials from B7 to B9 and the transmission spectrum of the resin base material A2. The transmission spectrum of the light absorbing layer of the resin base material B10 was obtained by taking a difference spectrum between the transmission spectrum of the resin base material B10 and the transmission spectrum of the resin base material A3. The transmission spectrum of the light absorbing layer of the resin base material B11 was obtained by taking a difference spectrum between the transmission spectrum of the resin base material B11 and the transmission spectrum of the resin base material A4. The difference spectra were determined by logarithmic (log₁₀) conversion of each of the transmission spectra of the resin base materials B1 to B11 having the light absorbing layer and the transmission spectra of the resin base materials A1 to A4 not having the light absorbing layer, and subjecting the differences to exponential conversion. Specifically, the transmittance (difference spectrum) of the light absorbing layer was determined based on the following formula: The transmittance of the light absorbing layer (%) = 10^[log₁₀ (the transmittance of each of the resin base materials B1 to B11) - log₁₀ (the transmittance of each of the resin base materials A1 to A4)] × 100. The results are presented in the figures from FIG. 1 to FIG. 5.

### (5-3) Transmission Spectra of Resin Base Materials D1 to D6

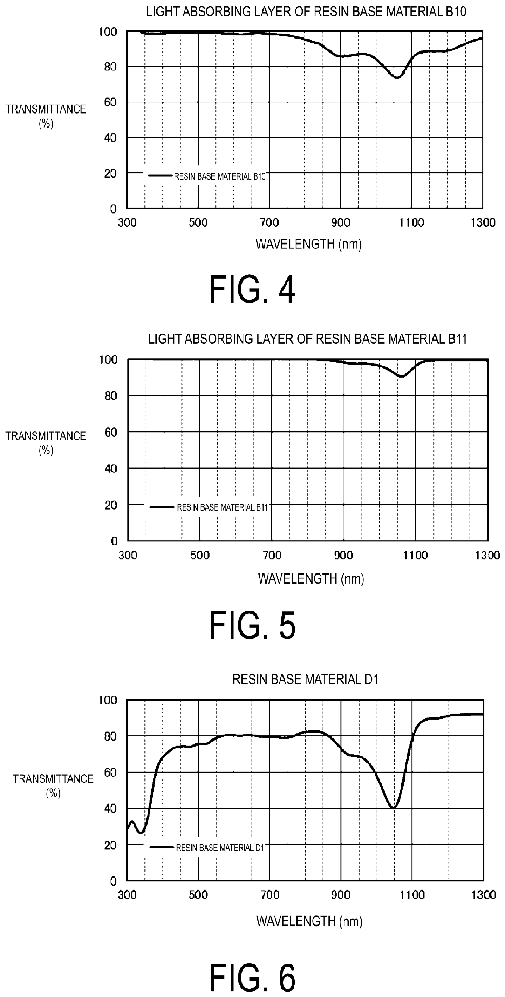

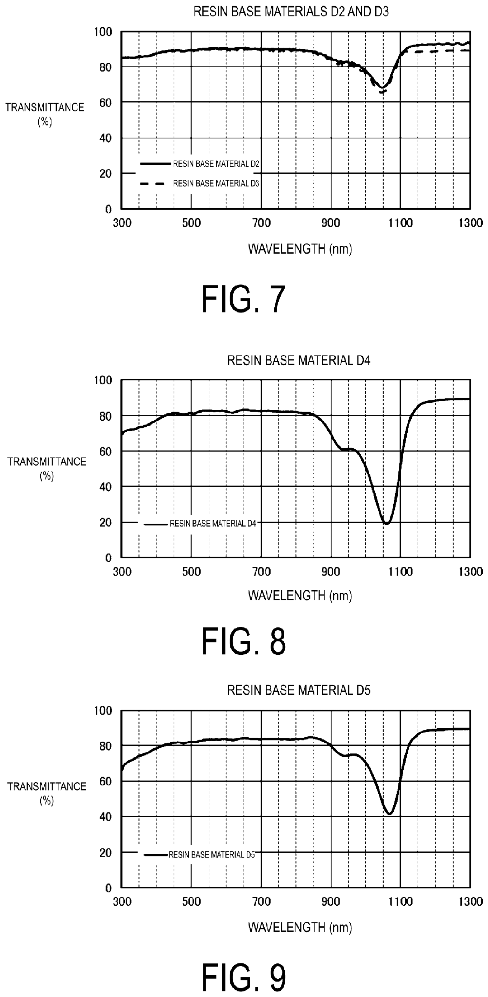

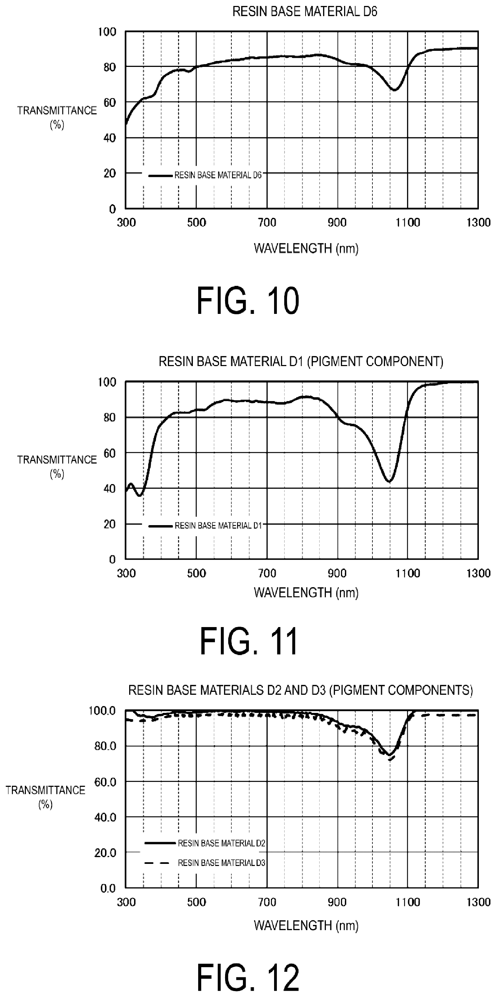

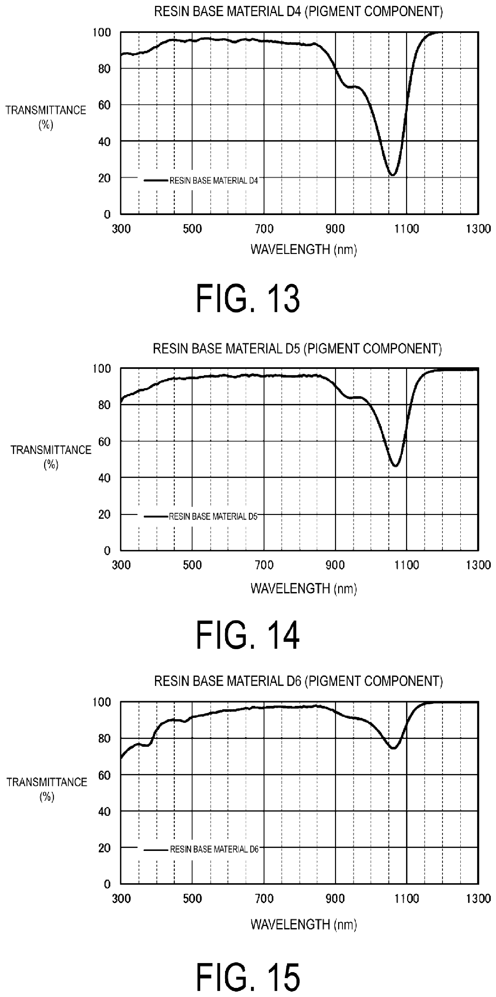

The transmission spectra of the resin base materials D1 to D6 were obtained, and the results are presented in the figures from FIG. 6 to FIG. 10. In addition, the transmission spectra of the pigment components of the resin base materials D1 to D6 were obtained, and the results are presented in the figures from FIG. 11 to FIG. 15. The transmission spectra of the pigment components of the resin base materials D1 to D6 were obtained by subjecting each of the transmission spectra of the resin base materials D1 to D6 and the transmission spectra of the resin base materials C1 to C6, which were made of the same resin base material containing no pigment components and had the same thickness, to logarithmic (log₁₀) conversion, and subjecting the differences to exponential conversion. In particular, the transmittances (difference spectra) of the pigment components of the resin base materials D1 to D6 were determined based on the following formula: transmittance (%) of each of the pigment components of the resin base materials D1 to D6 = 10^[log₁₀ (the transmittance of each of the resin base materials D1 to D6) - log₁₀ (the transmittance of each of the resin base materials C1 to C6)] × 100.

### (6) Laser Welding Test Method

### (6-1) Example 1

The resin base material A1 was brought into contact with the side of the resin base material B1 on which the light absorbing layer was formed and was irradiated with laser light from the resin base material A1 side to obtain a test specimen 1. Irradiation with laser light was performed using a laser apparatus (VL-W1, available from Panasonic Corporation), and the laser wavelength was 1070 nm, the laser output was adjusted in the range from 20 to 70W, and the laser scanning speed was adjusted in the range from 25 to 1050 mm/sec.

### (6-2) Example 2

A test specimen 2 was fabricated in the same manner as in Example 1, except that the resin base material B2 was used instead of the resin base material B1 in Example 1.

### (6-3) Example 3

A test specimen 3 was fabricated in the same manner as in Example 1, except that the resin base material B3 was used instead of the resin base material B1 in Example 1.

### (6-4) Example 4

A test specimen 4 was fabricated in the same manner as in Example 1, except that the resin base material B4 was used instead of the resin base material B1 in Example 1.

### (6-5) Example 5

A test specimen 5 was fabricated in the same manner as in Example 1, except that the resin base material B5 was used instead of the resin base material B1 in Example 1.

### (6-6) Example 6

A test specimen 6 was fabricated in the same manner as in Example 1, except that the resin base material B6 was used instead of the resin base material B1 in Example 1.

### (6-7) Example 7

A test specimen 7 was fabricated in the same manner as in Example 1, except that the resin base material A2 was used instead of the resin base material A1 and the resin base material B7 was used instead of the resin base material B1 in Example 1.

### (6-8) Example 8

A test specimen 8 was fabricated in the same manner as in Example 1, except that the resin base material B8 was used instead of the resin base material B7 in Example 7.

### (6-9) Example 9

A test specimen 9 was fabricated in the same manner as in Example 1, except that the resin base material B9 was used instead of the resin base material B7 in Example 7.

### (6-10) Example 10

A test specimen 10 was fabricated in the same manner as in Example 1, except that the resin base material A3 was used instead of the resin base material A1 and the resin base material B10 was used instead of the resin base material B1 in Example 1.

### (6-11) Example 11

A test specimen 11 was fabricated in the same manner as in Example 1, except that the resin base material A4 was used instead of the resin base material A1 and the resin base material B11 was used instead of the resin base material B1 in Example 1.

### (6-12) Comparative Example 1

The resin base materials A1s were brought into contact with each other and irradiated with laser light to obtain a test specimen 12.

### (6-13) Comparative Example 2

The resin base materials A2s were brought into contact with each other and irradiated with laser light to obtain a test specimen 13.

### (6-14) Comparative Example 3

The resin base materials A3s were brought into contact with each other and irradiated with laser light to obtain a test specimen 14.

### (6-15) Comparative Example 4

The resin base materials A4s were brought into contact with each other and irradiated with laser light to obtain a test specimen 15.

### (6-16) Comparative Example 5

A test specimen 16 was fabricated in the same manner as in Example 1 except that the resin base material B12 was used instead of the resin base material B1 in Example 1.

### (6-17) Comparative Example 6

A test specimen 17 was fabricated in the same manner as in Example 1, except that the resin base material B 13 was used instead of the resin base material B1 in Example 1.

### (6-18) Example 12

The resin base material D1 was placed in between the two resin base materials A1s and brought into contact therewith, and irradiated with laser light to obtain a test specimen 18.

### (6-19) Example 13

The resin base material A2 was brought into contact with the resin base material D2 and irradiated with laser light from the resin base material A2 side to obtain a test specimen 19.

### (6-20) Example 14

The resin base material D3 was placed in between the two resin base materials A2s and brought into contact with each other, and irradiated with laser light to obtain a test specimen 20.

### (6-21) Example 15

The resin base material D4 was placed in between the two resin base materials A4s, brought into contact with each other, and irradiated with laser light to obtain a test specimen 21.

### (6-22) Example 16

The resin base material D5 was placed in between two PSt plates, brought into contact with each other, and irradiated with laser light to obtain a test specimen 22. The PSt plate was fabricated by cutting a polystyrene plate (size 50 mm × 100 mm × 2 mmt) into a size of 25 mm × 17 mm with an ultrasonic cutter (SUW-30CT, available from SUZUKI MOTOR CORPORATION).

### (6-23) Example 17

The resin base material D6 was placed in between two AS plates, brought into contact with each other, and irradiated with laser light to obtain a test specimen 23. The AS plate was fabricated by cutting an acrylonitrile-styrene copolymer plate (size 50 mm × 100 mm × 2 mmt) into a size of 25 mm × 17 mm with an ultrasonic cutter (SUW-30CT, available from SUZUKI MOTOR CORPORATION).

### (6-24) Comparative Example 7

The resin base material C1 was placed in between the two resin base materials Als, brought into contact with each other, and irradiated with laser light to obtain a test specimen 24.

### (6-25) Comparative Example 8

The resin base material A2 was brought into contact with the resin base material C2 and irradiated with laser light from the resin base material A2 side to obtain a test specimen 25.

### (6-26) Comparative Example 9

The resin base material C3 was placed in between the two resin base materials A2s and irradiated with laser light to obtain a test specimen 26.

### (6-27) Comparative Example 10

The resin base material C4 was placed in between the two resin base materials A4s and irradiated with laser light to obtain a test specimen 27.

### (6-28) Comparative Example 11

The resin base material C5 was placed in between the two PSt plates used in Example 16, brought into contact with each other, and irradiated with laser light to obtain a test specimen 28.

### (6-29) Comparative Example 12

The resin base material C6 was placed in between the two AS plates used in Example 17, brought into contact with each other, and irradiated with laser light to obtain a test specimen 29.

### (7) Measurement of Welding Strength of Test Specimen

The welding strength of each of the test specimens 1 to 29 (size: 37.5 mm × 17 mm) fabricated in Examples 1 to 17 and Comparative Examples 1 to 12 was measured using a digital force gauge (ZTS-1000N, available from IMADA CO., LTD.). In Examples 1 to 11 and Comparative Examples 5 and 6, each welding strength was measured by fixing the tips of the resin base material A and the resin base material B to jigs, respectively and performing a tensile load test (test speed 10 mm/min). In Examples 12 and 14 to 17 and Comparative Examples 1 to 4, 7, and 9 to 12, each welding strength was measured by fixing one tip of the resin base material A (or resin plate) and the other tip of the resin base material A (or resin plate) to a jig, respectively, and performing a tensile load test (test speed 10 mm/min). In Example 13 and Comparative Example 8, each welding strength was measured by fixing the tips of the resin base material A and the tips of the resin base material C or D to jigs, respectively, and performing a tensile load test (test speed 10 mm/min). A case where the welding strength was 10 MPa or more was evaluated as "∘", and a case where the welding strength was lower than the 10 MPa or the specimen was not welded was evaluated as "×". The results are presented in Table 6 and Table 7.

Table 6 and Table 7 also present the average visible light transmittances of the pigment components of the light absorbing layers of the resin base material B and the resin base material D (absorbing material sheet) in the range of wavelengths from 380 nm to 780 nm in each of Examples and Comparative Examples. The average visible light transmittance of the light absorbing layer of the resin base material B was determined from the transmission spectrum of the light absorbing layer of the resin base material B determined in the section (5-2), and the average visible light transmittance of the pigment component of the resin base material D was determined from the transmission spectrum of the pigment component of the resin base material D determined in the section (5-3).

**[Table 6]**

| | Test specimen stacked structure | Light absorbing layer average visible light transmittance | Test specimen welding strength |
|---|---|---|---|
| Example 1 | PMMA plate/light absorbing layer (PMMA-cyanine)/PMMA plate | 98.1% | ○ |
| Example 2 | PMMA plate/light absorbing layer (PMMA-cyanine)/PMMA plate | 93.3% | ○ |
| Example 3 | PMMA plate/light absorbing layer (PMMA-cyanine)/PMMA plate | 99.6% | ○ |
| Example 4 | PMMA plate/light absorbing layer (PMMA-cyanine)/PMMA plate | 99.3% | ○ |
| Example 5 | PMMA plate/light absorbing layer (acrylic resin A-cyanine)/PMMA plate | 88.3% | ○ |
| Example 6 | PMMA plate/light absorbing layer (acrylic resin A-cyanine)/PMMA plate | 98.6% | ○ |
| Example 7 | Acrylic plate/light absorbing layer (acrylic resin A-cyanine)/acrylic plate | 93.4% | ○ |
| Example 8 | Acrylic plate/light absorbing layer (acrylic resin A-cyanine)/acrylic plate | 99.2% | ○ |
| Example 9 | Acrylic plate/light absorbing layer (acrylic resin A-cyanine)/acrylic plate | 99.9% | ○ |
| Example 10 | COP plate/light absorbing layer (COP-cyanine)/COP plate | 98.4% | ○ |
| Example 11 | PC plate/light absorbing layer (PC-cyanine)/PC plate | 99.9% | ○ |
| Comparative Example 1 | PMMA plate/PMMA plate | - | × |
| Comparative Example 2 | Acrylic plate/acrylic plate | - | × |
| Comparative Example 3 | COP plate/COP plate | - | × |
| Comparative Example 4 | PC plate/PC plate | - | × |
| Comparative Example 5 | PMMA plate/light absorbing layer (PMMA-phthalocyanine)/PMMA plate | 30.1% | ○ |
| Comparative Example 6 | PMMA plate/light absorbing layer (PMMA-phthalocyanine)/PMMA plate | 49.8% | ○ |

**[Table 7]**

| | Test specimen stacked structure | absorbing material sheet pigment component average visible light transmittance | Test specimen welding strength |
|---|---|---|---|
| Example 12 | PMMA plate/absorbing material sheet (PMMA-cyanine)/PMMA plate | 85.8% | ○ |
| Example 13 | Acrylic plate/absorbing material sheet (acrylic resin A-cyanine) | 98.9% | ○ |
| Example 14 | Acrylic plate/absorbing material sheet (acrylic resin A-cyanine)/acrylic plate | 97.1% | ○ |
| Example 15 | PC plate/absorbing material sheet (PC-cyanine)/PC plate | 94.7% | ○ |
| Example 16 | PSt plate/absorbing material sheet (PSt-cyanine)/PSt plate | 95.0% | ○ |
| Example 17 | AS plate/absorbing material sheet (AS-cyanine)/AS plate | 93.3% | ○ |
| Comparative Example 7 | PMMA plate/PMMA sheet/PMMA plate | - | × |
| Comparative Example 8 | Acrylic plate/acrylic resin A sheet | - | × |
| Comparative Example 9 | Acrylic plate/acrylic resin A sheet/acrylic plate | - | × |
| Comparative Example 10 | PC plate/PC sheet /PC plate | - | × |
| Comparative Example 11 | PSt plate/PSt sheet /PSt plate | - | × |
| Comparative Example 12 | AS plate/AS sheet/AS plate | - | × |

### Industrial Applicability

The material for laser welding of the present invention can be used for laser welding applications.

## Claims

1. A material for laser welding, comprising a resin and a cyanine compound represented by Formula (1) set forth below:
[Chem. 1] A^{⊕}-L=A X^{⊖} (1)
where in Formula (1),
L represents a methine chain having 3 or more and 9 or less carbon atoms, the methine groups contained in the methine chain each independently optionally have a substituent, and the substituents are optionally linked to each other;
A⁺ and A represent a group bonded to the methine chain L; and
X⁻ represents a monovalent anion whose conjugate acid has a pKa of -8.0 or less,
wherein the cyanine compound has, in a range of wavelengths from 380 nm to 780 nm, an average transmittance of 81% or more when a transmittance at an absorption maximum wavelength is 10% in a range of wavelengths from 300 nm to 1300 nm.

2. The material for laser welding according to claim 1, wherein the cyanine compound has the absorption maximum wavelength in a range of wavelengths from 750 nm to 1300 nm.

3. The material for laser welding according to claim 1, further comprising a solvent.

4. The material for laser welding according to claim 1, wherein the resin comprises a thermoplastic resin.

5. The material for laser welding according to claim 1, wherein the resin comprises a (meth)acrylic resin comprising a structural unit having a ring structure in a main chain, and the ring structure comprises at least one selected from the group consisting of a lactone ring structure, a glutarimide structure, and a maleimide structure.

6. The material for laser welding according to claim 1, wherein in Formula (1), A⁺ and A represent any of the groups represented by Formula (2) to Formula (7) set forth below: 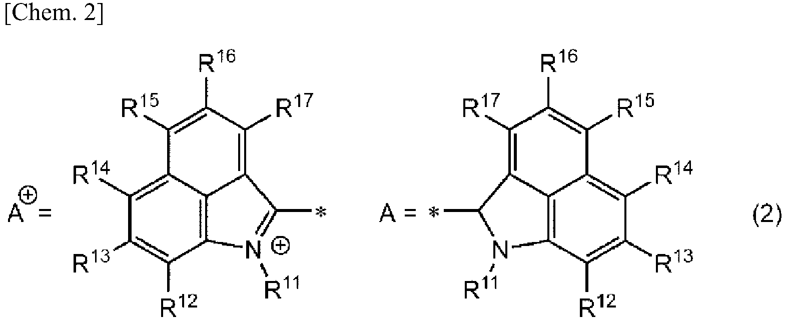
where in Formula (2),
R¹¹ represents an organic group,
R¹² to R¹⁷ each independently represent a hydrogen atom, a halogen atom, or an organic group, and
* represents a site of bonding to the methine chain L in Formula (1); 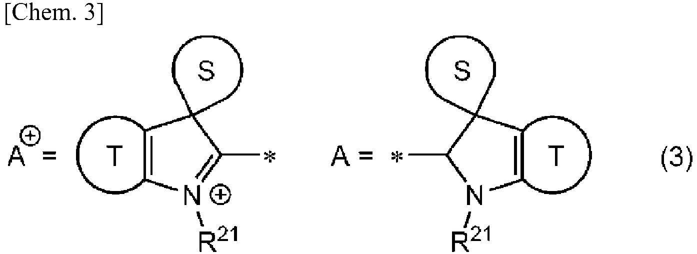
where in Formula (3),
R²¹ represents an organic group,
a ring S represents: a hydrocarbon ring having a condensed ring structure optionally having a substituent; or a heterocyclic ring having a condensed ring structure optionally having a substituent; and the ring S is spiro-bonded to an adjacent pyrrole ring,
a ring T represents: an aromatic hydrocarbon ring optionally having a substituent; an aromatic heterocyclic ring optionally having a substituent; or a condensed ring comprising these ring structures optionally having a substituent, and
* represents a site of bonding to the methine chain L of Formula (1); 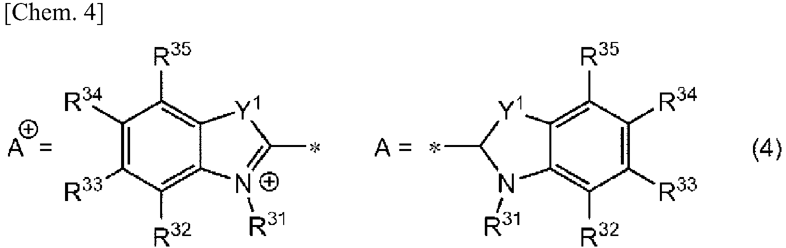
where in Formula (4),
R³¹ represents an organic group,
R³² to R³⁵ each independently represent a hydrogen atom, a halogen atom, or an organic group, or R³² and R³³, R³³ and R³⁴, and R³⁴ and R³⁵ are optionally linked to each other to form a ring,
Y¹ represents an oxygen atom, a sulfur atom, CH=CH, or CR³⁶R³⁷, in which R³⁶ and R³⁷ each represent an organic group, and
* represents a site of bonding to the methine chain L of Formula (1); 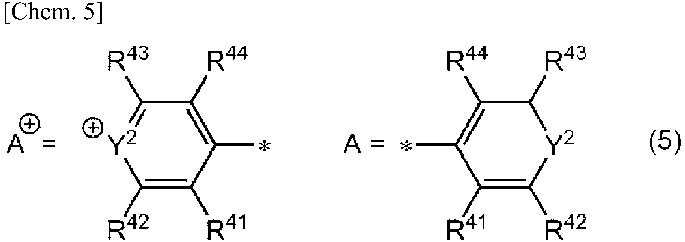
where in Formula (5),
R⁴¹ to R⁴⁴ each independently represent a hydrogen atom, a halogen atom, or an organic group, or R⁴¹ and R⁴², and R⁴³ and R⁴⁴ are optionally linked to each other to form a ring,
Y² represents an oxygen atom, a sulfur atom, or NR⁴⁵, in which R⁴⁵ represents an organic group, and
* represents a site of bonding to the methine chain L of Formula (1); 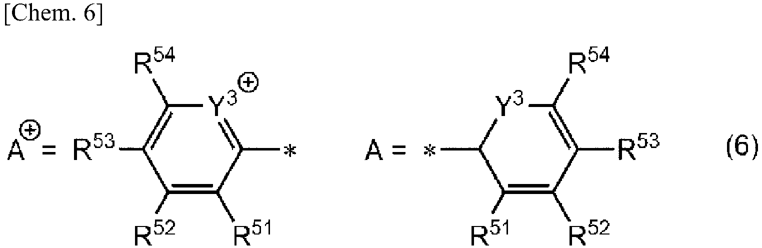
where in Formula (6),
R⁵¹ to R⁵⁴ each independently represent a hydrogen atom, a halogen atom, or an organic group,
Y³ represents an oxygen atom, a sulfur atom, or NR⁵⁵, in which R⁵⁵ represents an organic group, and
* represents a site of bonding to the methine chain L of Formula (1); and 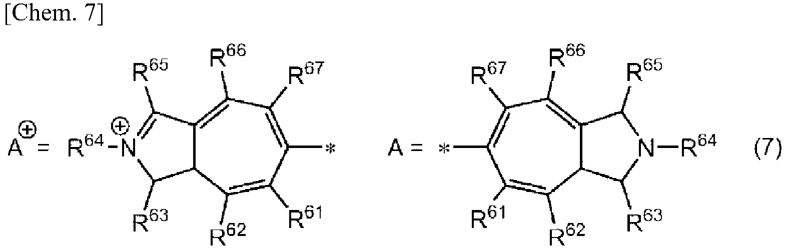
where in Formula (7),
R⁶¹ to R⁶³ and R⁶⁵ to R⁶⁷ each independently represent a hydrogen atom, a halogen atom, or an organic group,
R⁶⁴ represents an organic group, and
* represents a site of bonding to the methine chain L of Formula (1).

7. A laminate, comprising:
a base material; and
a light absorbing layer provided on the base material, the light absorbing layer comprising the material for laser welding described in any one of claims 1 to 6.

8. The laminate according to claim 7, wherein an average transmittance of the light absorbing layer in a range of wavelengths from 380 nm to 780 nm is 80% or more.

9. An absorbing material, comprising the material for laser welding described in any one of claims 1 to 6.
